# EUROPEAN PATENT APPLICATION

(11) **EP 3 690 834 A1**
(43) Date of publication of application: **05.08.2020**
(21) Application number: 18861780.7
(22) Date of filing: 28.09.2018
(51) Int. Cl.: G07F 11/60, B65G 59/06, G07F 9/00, B65G 59/00

(54) **DISPENSING DEVICE**

(30) Priority: 29.09.2017 JP 2017191831
(71) Applicant: Japan Tobacco Inc., Tokyo 105-8422 (JP)
(72) Inventor: OIKAWA, Ayumu, Tokyo 105-8422 (JP); OJIMA, Atsushi, Tokyo 105-8422 (JP); UEHATA, Yugo, Isesaki-shi, Gunma 372-8502 (JP); OTAKE, Yuki, Isesaki-shi, Gunma 372-8502 (JP); YAMATANI, Hiromi, Isesaki-shi, Gunma 372-8502 (JP)
(74) Representative: Hoffmann Eitle
(86) International application number: PCT/JP2018/036425
(87) International publication number: WO 2019/066024

(57) **Abstract**

A dispensing device provides a dispensing device that can dispense a product to be dispensed, the dispensing device including: a magazine (30) that stores plural products in a stacked state; and a storage shelf that stores a plurality of the magazines (30) ; and a conveying mechanism that conveys the magazine (30). The storage shelf includes an installed-magazine mounting portion at which the magazine (30) is installed and mounted, and a magazine supporting portion that supports a plurality of the magazines (30). The dispensing mechanism is configured to dispense a product from the magazine (30) supported with the magazine supporting portion. The conveying mechanism conveys the magazine (30) between the installed-magazine mounting portion and the magazine supporting portion.

## Description

### TECHNICAL FIELD

The present invention relates to a dispensing device that automatically dispenses a product to be dispensed.

### BACKGROUND ART

In a typical convenience store or other shop, tobacco products under various brands are displayed in so-called office furniture on a brand by brand basis. (1) A purchaser designates a brand, and a sales clerk picks up one of tobacco products under that brand from the office furniture. Alternatively, (2) the purchaser his/herself takes one of tobacco products under his or her desired brand from the office furniture to purchase it. The "tobacco product" as used herein means a package having a cuboid shape and storing a plurality of cigarettes as described later, or a package having a cuboid shape and storing other tobacco products, rather than meaning an individual cigarette provided to smoke.

Furthermore, Patent Document 1 describes an automatic vending machine that automatically dispenses a tobacco product to be dispensed.

In the automatic vending machine in Patent Document 1, plural product storing columns each accommodate tobacco products in a loaded state on a type by type basis, and are arranged into plural rows and columns in horizontal and vertical directions. A product pushing-out unit is provided in a lower portion of each of the product storing columns, the product pushing-out unit pushing out a tobacco product at the lowermost column. The automatic vending machine according to this document further includes a product picking-up unit that picks up a product pushed out by the product pushing-out unit, and a moving unit that moves this product picking-up unit to a product exporting unit from a position opposed to the product pushing-out unit of each of the product storing columns. At the time of dispensing a tobacco product, a tobacco product at the lowermost column of the product storing columns is first put into the product picking-up unit. Next, the product picking-up unit is moved to the product exporting unit. Then, the tobacco product is exported from the product picking-up unit and is placed onto a chute to dispense the tobacco product.

### CITATION LIST

### PATENT DOCUMENTS

Patent Document 1: Japanese Patent Application Laid-open No. 2000-149126

### SUMMARY OF THE INVENTION

### PROBLEM TO BE SOLVED BY THE INVENTION

Incidentally, in addition to automation of dispensing a tobacco product, it is also demanded to contrive automatic reloading of tobacco products under various brands in an error-free and efficient manner.

The present invention has been made in view of the problem described above, and provides a dispensing device capable of favorably reloading various types of products, typified by a tobacco product.

### MEANS FOR SOLVING THE PROBLEM

According to the present invention, there is provided a dispensing device that can dispense a product to be dispensed, including:
a magazine that stores a plurality of products in a stacked state;
a storage shelf that stores a plurality of the magazines;
a conveying mechanism that conveys the magazine; and
a dispensing mechanism that dispenses the product, in which
the storage shelf includes:
   an installed-magazine mounting portion at which the magazine is installed and mounted; and
   a magazine supporting portion that supports a plurality of the magazines,
the dispensing mechanism is configured to dispense the product from the magazine supported with the magazine supporting portion, and
the conveying mechanism conveys the magazine between the installed-magazine mounting portion and the magazine supporting portion.

### EFFECT OF THE INVENTION

According to the present invention, the magazine supporting portion of the storage shelf is caused to support plural magazines that each store plural products, and using the dispensing mechanism, it is possible to automatically dispense a product to be dispensed, from a magazine supported with the magazine supporting portion.

In addition, with the conveying mechanism, it is possible to convey a magazine in which a product is loaded, from the installed-magazine mounting portion to the magazine supporting portion, and also convey a magazine that needs a product to be reloaded, from the magazine supporting portion to the installed-magazine mounting portion. This makes it possible to favorably reload a product.

### BRIEF DESCRIPTION OF THE DRAWINGS

Fig. 1 is a perspective view illustrating a dispensing device according to an exemplary embodiment.
Fig. 2 is a plan view illustrating the dispensing device according to the exemplary embodiment: in Fig. 2, a top plate portion is not shown.
Fig. 3 is an elevation view illustrating the dispensing device according to the exemplary embodiment: in Fig. 3, a front surface wall is not shown.
Fig. 4 is a front sectional view illustrating the dispensing device taken along the line A-A in Fig. 2.
Fig. 5 is a front sectional view illustrating the dispensing device taken along the line B-B in Fig. 2.
Fig. 6 is a partially enlarged view of Fig. 5, in which a part of magazines is not shown.
Fig. 7 is a partially enlarged view illustrating a lower end portion of a magazine and its surroundings, the magazine being supported with a storage shelf.
Fig. 8 is a perspective view in which a storage shelf is partially enlarged.
Fig. 9 is a plan view in which a storage shelf is partially enlarged.
Fig. 10 is a perspective view illustrating the dispensing device according to the exemplary embodiment being partially enlarged.
Fig. 11 is a perspective view illustrating a magazine.
Fig. 12 is a side view illustrating a magazine.
Fig. 13 is an elevation view illustrating a magazine.
Fig. 14 is an enlarged diagram illustrating a back surface of a lower end portion of a magazine.
Fig. 15 is an elevation view illustrating a magazine in a state where a height size of a discharging port is smaller than that in a state illustrated in Fig. 13.
Figs. 16A, 16B, and 16C are perspective views illustrating a series of operations in which products are stored in a magazine.
Figs. 17A, 17B, 17C, and 17D are sectional plan views each schematically illustrating a magazine.
Fig. 18 is a perspective view illustrating a movable body of a conveying mechanism.
Fig. 19 is an elevation view illustrating a movable body of a conveying mechanism.
Fig. 20 is a plan view illustrating a movable body of a conveying mechanism.
Figs. 21A and 21B are side views each illustrating a movable body of a conveying mechanism: of these drawings, Fig. 21A illustrates a state where an extending-retracting portion is accommodated in a movable-body main body of a movable body, and Fig. 21B illustrates a state where the extending-retracting portion protrudes from the movable-body main body.
Fig. 22 is a perspective view illustrating the movable body of the conveying mechanism in a state where the extending-retracting portion protrudes from the movable-body main body.
Fig. 23 is a diagram illustrating a series of operations in which a magazine is held with a movable body, and also illustrating a state where the movable body is moved to a position where the moveable body is opposed to the magazine.
Fig. 24 is a diagram illustrating a series of operations in which a magazine is held with the movable body, and also illustrating a state where the extending-retracting portion protrudes from the movable-body main body.
Fig. 25 is a diagram illustration a series of operations in which a magazine is held with the movable body, and also illustrating a state where the movable body relatively ascends with respect to the magazine.
Fig. 26 is a diagram illustrating a series of operations in which a magazine is held with the movable body, and also illustrating a state where the extending-retracting portion is accommodated in the movable-body main body.
Fig. 27 is a diagram illustrating a series of operations in which a magazine is transferred to a magazine supporting portion using the movable body, and also illustrating a state where the movable body is moved to a position where the movable body is opposed to the magazine.
Fig. 28 is a diagram illustrating a series of operations in which a magazine is transferred to the magazine supporting portion using the movable body, also illustrating a state where the extending-retracting portion protrudes from the movable-body main body.
Fig. 29 is a diagram illustrating a series of operations in which a magazine is transferred to the magazine supporting portion using the movable body, and also illustrating a state where the movable body relatively descends with respect to the magazine supporting portion.
Fig. 30 is a diagram illustrating a series of operations in which a magazine is transferred to the magazine supporting portion using the movable body, and also illustrating a state where the extending-retracting portion is accommodated in the movable-body main body.
Figs. 31A and 31B are perspective views illustrating a state where a magazine is held with the extending-retracting portion of the movable body: of these drawings, Fig. 31A illustrates a state where the extending-retracting portion protrudes from the movable-body main body, and Fig. 31B illustrates a state where the extending-retracting portion is accommodated in the movable-body main body.
Fig. 32 is a diagram illustrating a series of operations in which a product is dispensed from a magazine using the movable body (dispensing mechanism), and also illustrating a state where the movable body is moved to a position where the movable body is opposed to the magazine.
Fig. 33 is a diagram illustrating a series of operations in which a product is dispensed from a magazine using the movable body (dispensing mechanism), and also illustrating a state where the extending-retracting portion protrudes from the movable-body main body.
Fig. 34 is a diagram illustrating a series of operations in which a product is dispensed from a magazine using the movable body (dispensing mechanism), and also illustrating a state where the extending-retracting portion is accommodated in the movable-body main body.
Fig. 35 is a perspective view illustrating a state where a product has been dispensed from a magazine using the movable body (dispensing mechanism).
Fig. 36 is a perspective view illustrating a lower portion (the movable-body main body and the extending-retracting portion) of the movable body.
Fig. 37 is a perspective view illustrating a lower portion of the movable body, in which a third extending-retracting portion main body is not shown.
Fig. 38 is a perspective view illustrating a lower portion of the movable body: the number of members that are not shown in this drawing is more than that of Fig. 37.
Fig. 39 is a perspective view illustrating a lower portion of a movable body: the number of members that are not shown in this drawing is more than that of Fig. 38.
Fig. 40 is a plan view illustrating a lower portion of the movable body, in which a part of members are not shown as in Fig. 38.
Fig. 41 is a perspective view illustrating the main body member that constitutes the extending-retracting portion main body of the extending-retracting portion.
Fig. 42 is a perspective view illustrating a second extending-retracting portion main body of the extending-retracting portion.
Fig. 43 is a perspective view illustrating a third extending-retracting portion main body of the extending-retracting portion.
Fig. 44 is a perspective view illustrating a lower portion of the movable body, and also illustrating a state where the extending-retracting portion protrudes from the movable-body main body.
Fig. 45 is a perspective view illustrating the conveying mechanism of the dispensing device.
Fig. 46 is a side cross-sectional view illustrating the dispensing device according to the exemplary embodiment.
Fig. 47 is a perspective view illustrating a posture controlling member and surrounding portions.
Fig. 48 is a block diagram concerning the dispensing device according to the exemplary embodiment.
Fig. 49A is a perspective view illustrating a posture controlling member of a dispensing device according to a first modification example, and Fig. 49B is a side view illustrating the posture controlling member of the dispensing device according to the first modification example.
Fig. 50A is a perspective view illustrating a movable body of a dispensing device according to a second modification example; Fig. 50B is a perspective view illustrating a magazine of the dispensing device according to the second modification example; and, Fig. 50C is an enlarged perspective view illustrating a lower end portion of the magazine of the dispensing device according to the second modification example.
Fig. 51A is an elevation view illustrating a magazine supporting portion of a dispensing device according to a third modification example. Figs. 51B and 51C are perspective views illustrating a rear surface side of the magazine supporting portion of the dispensing device according to the third modification example. Of these drawings, Fig. 51B illustrates a state where a shutter member is not pushed by the extending-retracting portion, and a left half of Fig. 51C illustrates a state where the shutter member is pushed by the extending-retracting portion and is tilted.

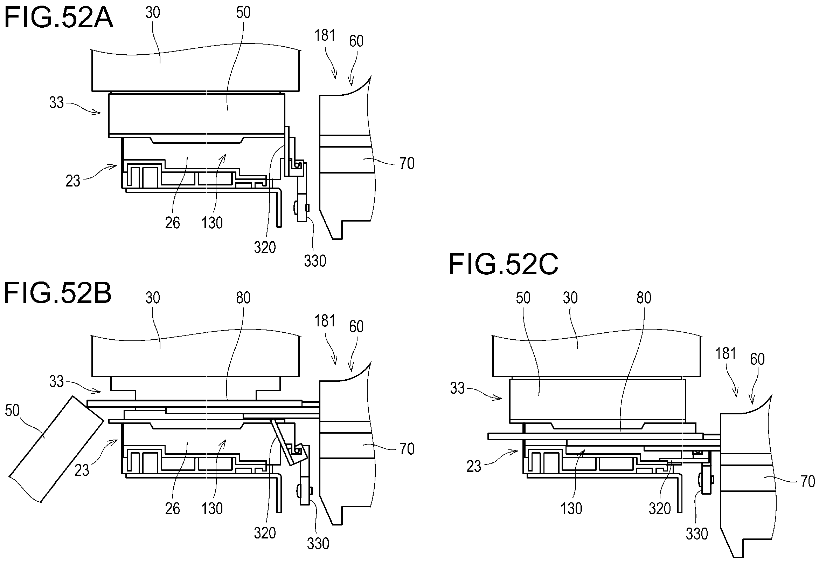

Figs. 52A, 52B, and 52C are side cross-sectional views each schematically illustrating the magazine supporting portion of the dispensing device according to the third modification example. Of these drawings, Fig. 52A illustrates a state where the shutter member is not pushed by the extending-retracting portion. Fig. 52B illustrates a state where, at the time of dispensing a product, the shutter member is pushed by the extending-retracting portion and is tilted. Fig. 52C illustrates a state where, with the extending-retracting portion entering an inserting space, the shutter member is pushed by the extending-retracting portion and is tilted.

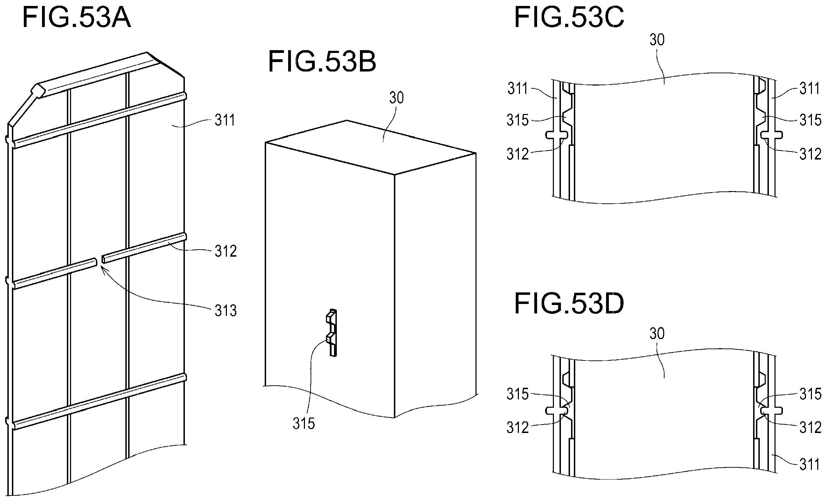

Fig. 53A is a perspective view illustrating a partition wall portion of a dispensing device according to a fourth modification example. Fig. 53B is a perspective view illustrating a magazine of the dispensing device according to the fourth modification example. Fig. 53C is an elevation view illustrating an operation in which a magazine is put at the magazine supporting portion or the installed-magazine mounting portion of the dispensing device according to the fourth modification example. Fig. 53C is an elevation view illustrating a state where the magazine is put at the magazine supporting portion or the installed-magazine mounting portion of the dispensing device according to the fourth modification example.

### DETAILED DESCRIPTION OF THE INVENTION

Below, exemplary embodiment according to the present invention will be described with reference to the drawings. Note that, in all of the drawings, the same reference characters are attached to similar constituent components, and explanation thereof will not be repeated as appropriate.

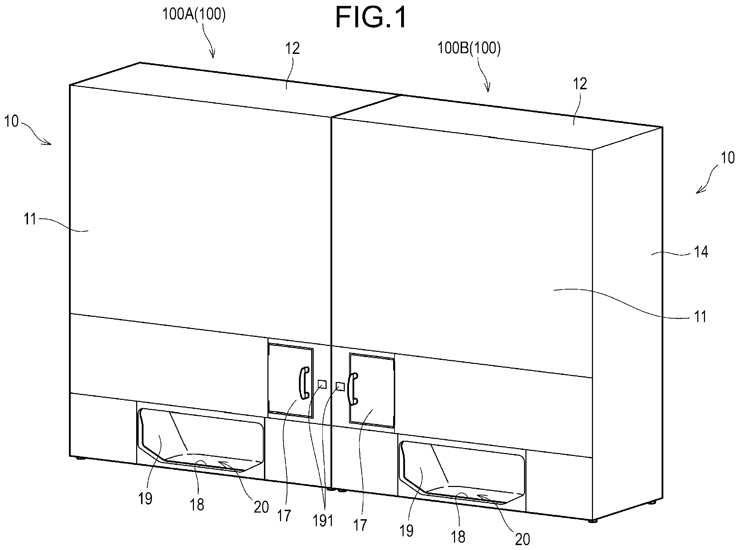

Fig. 1 is a perspective view illustrating dispensing devices 100 according to the exemplary embodiment. In Fig. 1, two dispensing devices 100 are disposed from side to side. Of these devices, the reference character "100A" is attached to the dispensing device 100 on the left side, and the reference character "100B" is attached to the dispensing device 100 on the right side. In the following description of the dispensing device 100, the dispensing device 100A on the left side will be described. The dispensing device 100A and the dispensing device 100B are configured, for example, to be left-right symmetrical. Thus, detailed explanation of the dispensing device 100B will not be repeated.

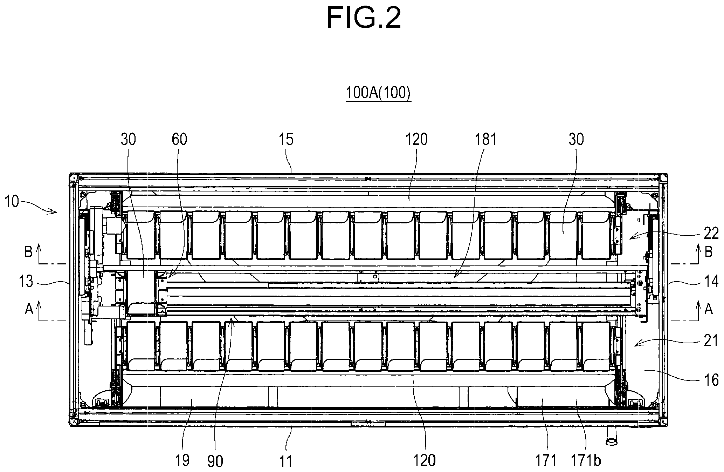

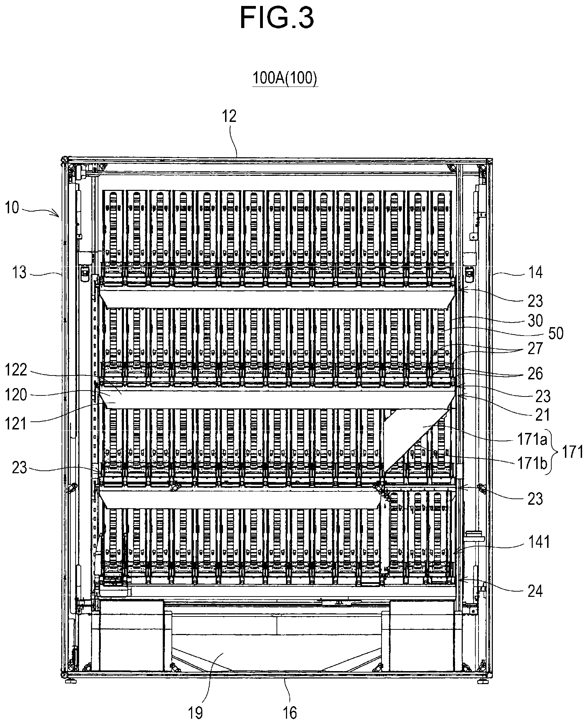

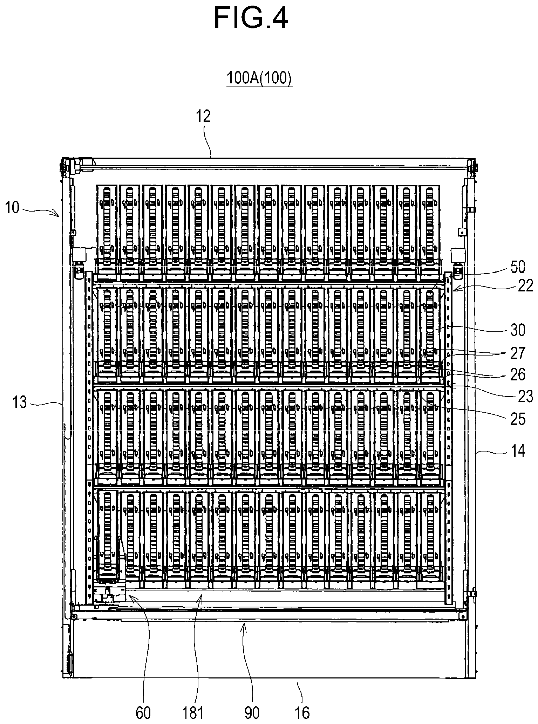

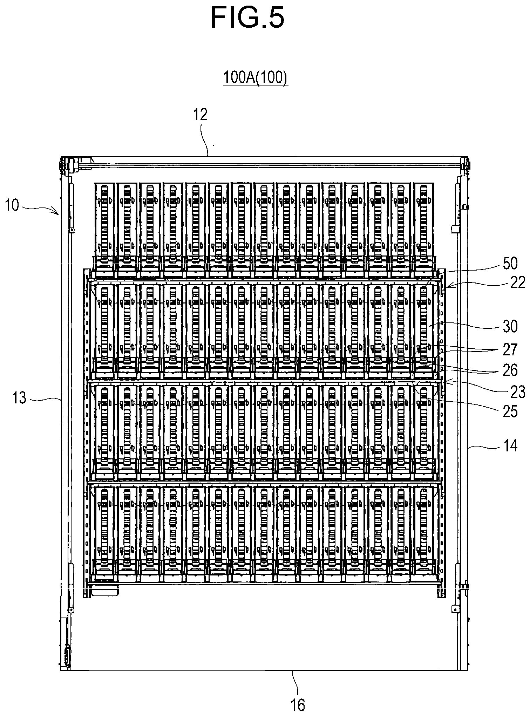

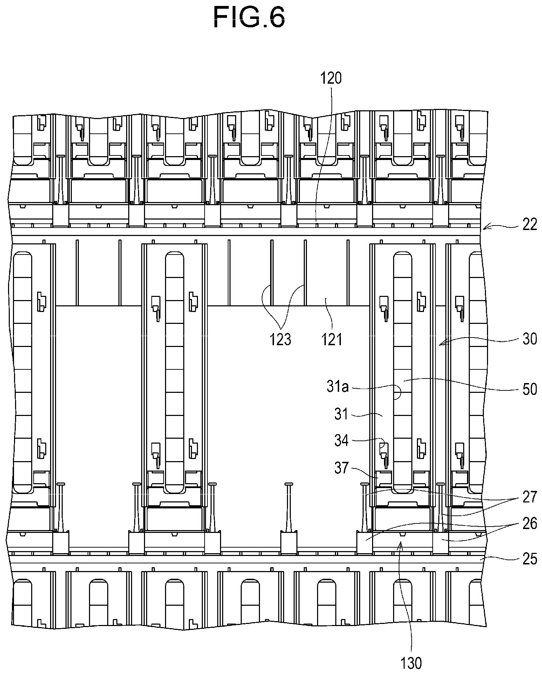

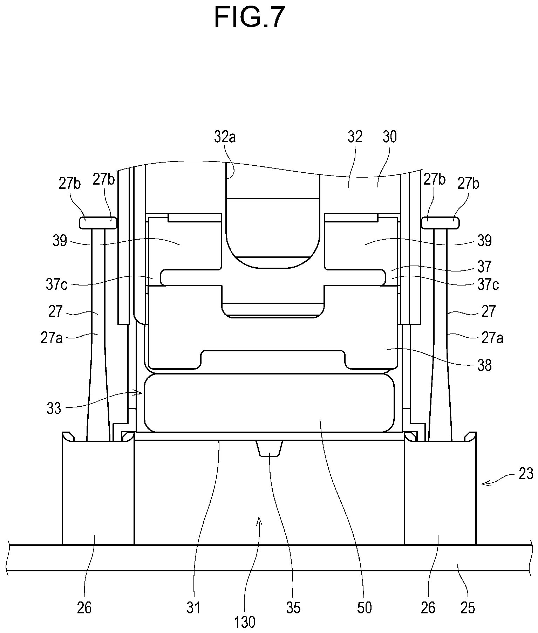

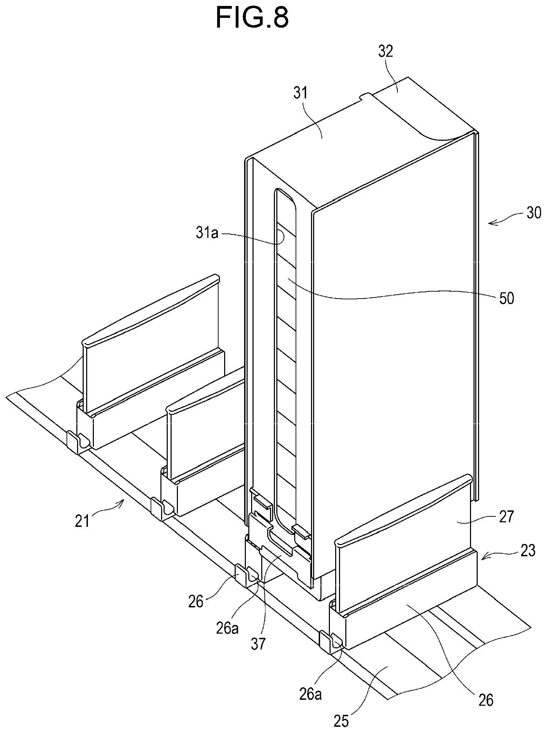

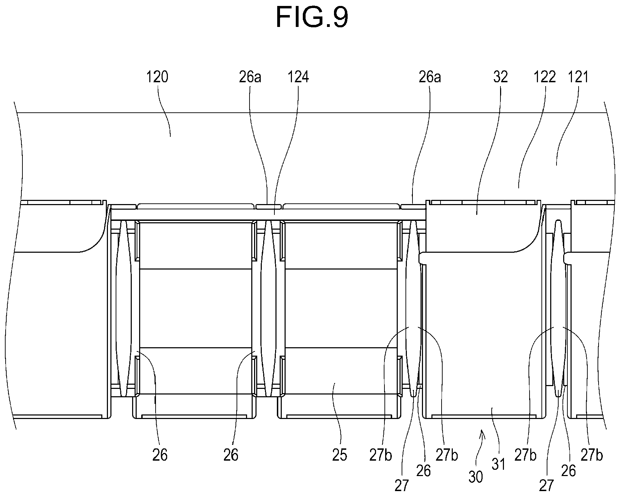

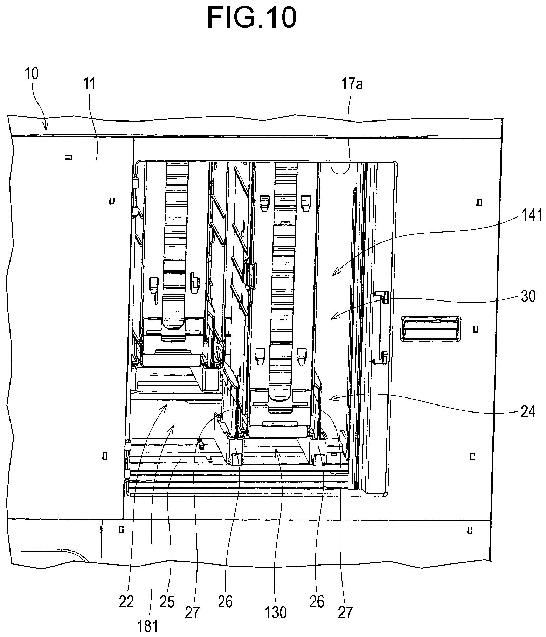

Fig. 2 is a plan view illustrating the dispensing device 100 according to the exemplary embodiment. However, in Fig. 2, a top plate portion 12 of a housing 10 is not shown. Fig. 3 is an elevation view illustrating the dispensing device 100 according to the exemplary embodiment. However, in Fig. 3, a front surface wall 11 of the housing 10 is not shown. Fig. 4 is a front sectional view illustrating the dispensing device taken along the line A-A in Fig. 2. Fig. 5 is a front sectional view illustrating the dispensing device taken along the line B-B in Fig. 2. Fig. 6 is a partially enlarged view of Fig. 5. However, in Fig. 6, a part of magazines 30 is not shown. Fig. 7 is a partially enlarged view illustrating a lower end portion of a magazine 30 and its surroundings, the magazine 30 being supported with a storage shelf 21. Fig. 8 is a perspective view in which the storage shelf 21 is partially enlarged. However, in Fig. 8, only one magazine 30 is shown. Fig. 9 is a plan view in which the storage shelf 21 is partially enlarged. However, in Fig. 9, a part of magazines 30 is not shown. Fig. 10 is a perspective view illustrating the dispensing device 100 according to the exemplary embodiment being partially enlarged. However, Fig. 10 does not show an open-close door 17 (Fig. 1), and illustrates the interior structure that can be seen when the open-close door 17 is opened.

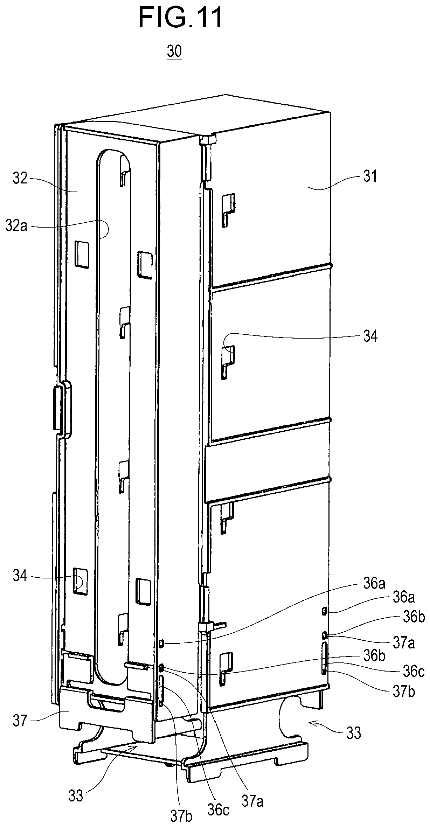

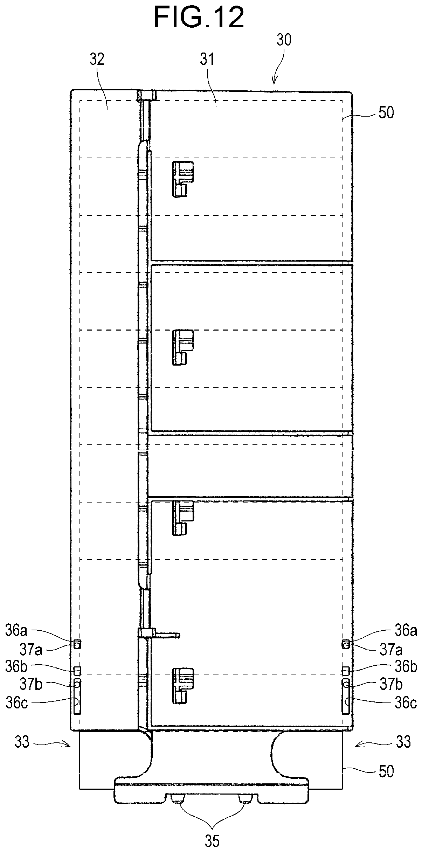

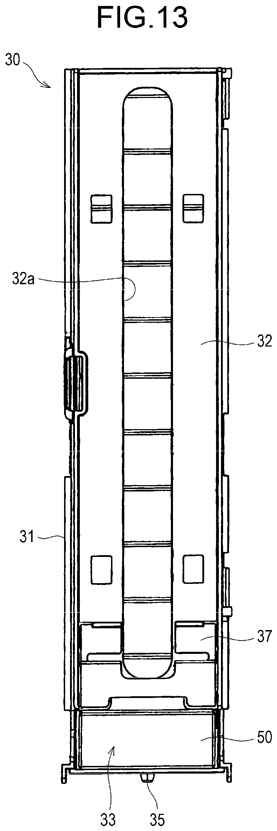

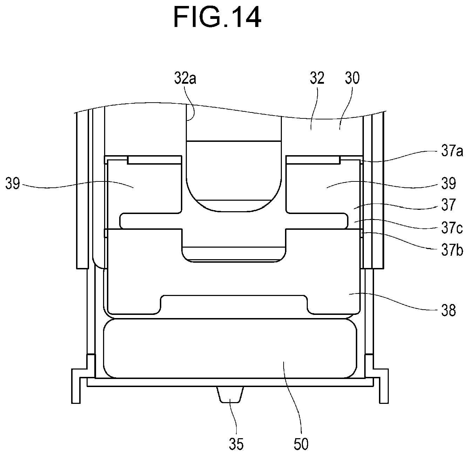

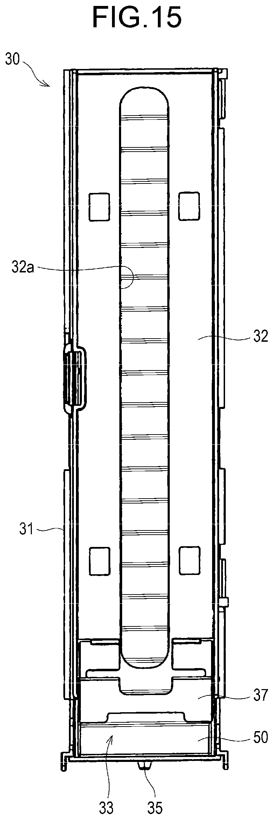

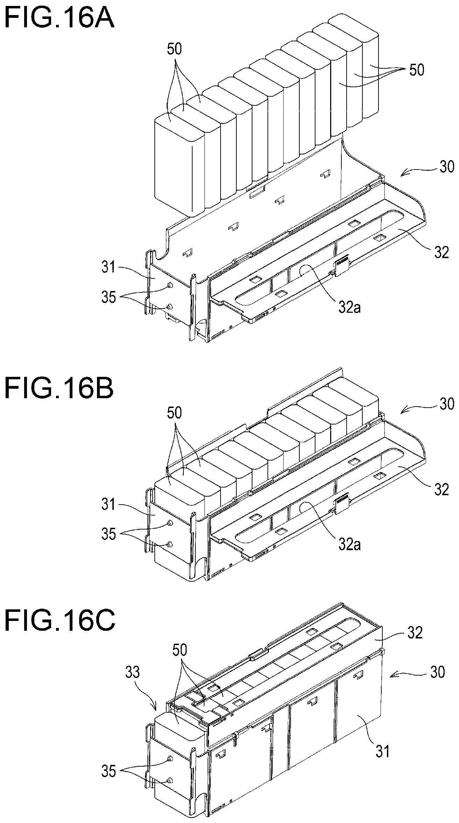

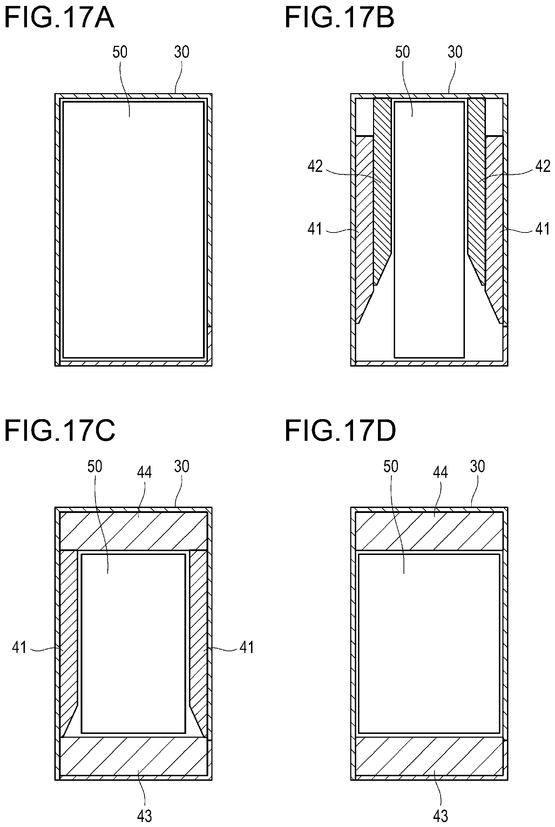

Fig. 11 is a perspective view illustrating the magazine 30. Fig. 12 is a side view illustrating the magazine 30. Fig. 13 is an elevation view illustrating the magazine 30. Fig. 14 is an enlarged diagram illustrating a back surface of a lower end portion of the magazine 30. Fig. 15 is an elevation view illustrating the magazine 30 in a state where a height size of a discharging port 33 is smaller than that in a state illustrated in Fig. 13. Figs. 16A, 16B, and 16C are perspective views illustrating a series of operations in which products 50 are stored in the magazine 30. Figs. 17A, 17B, 17C, and 17D are sectional plan views each schematically illustrating the magazine 30.

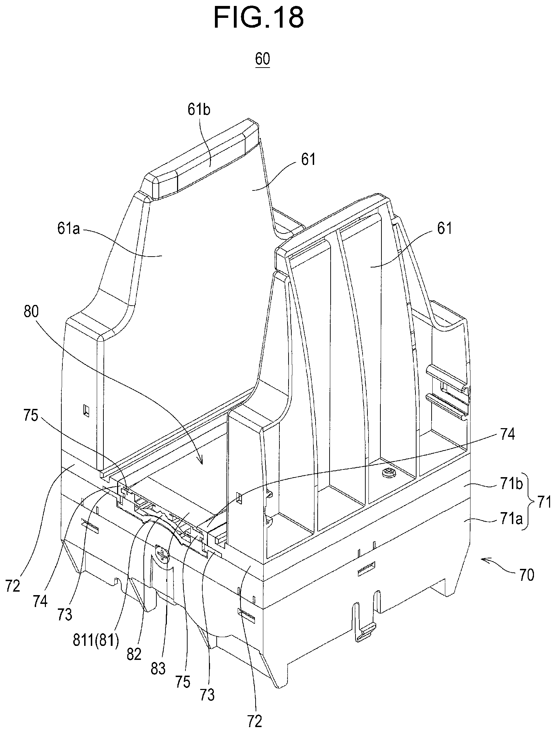

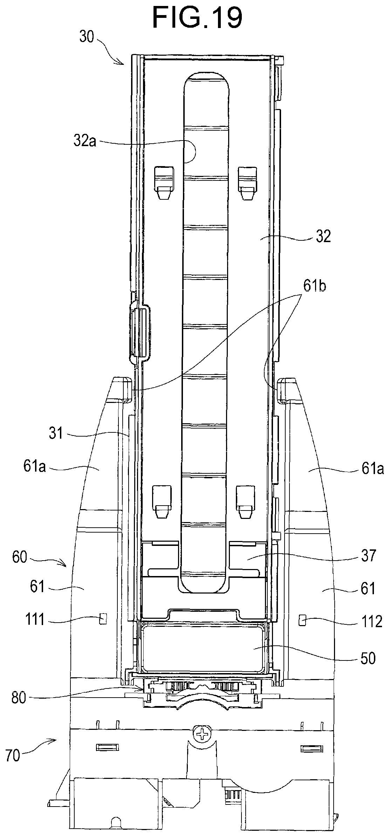

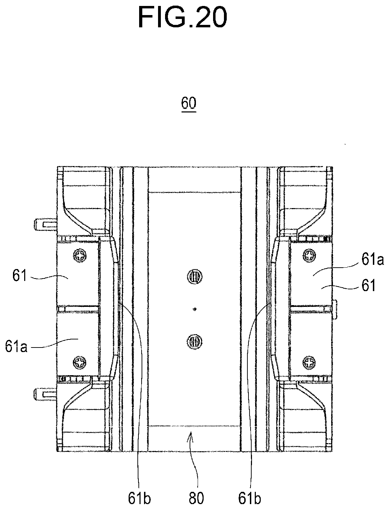

Fig. 18 is a perspective view illustrating a movable body 60 of a conveying mechanism. Fig. 19 is an elevation view illustrating the movable body 60. Fig. 19 illustrates a state where the magazine 30 is held with the movable body 60. Fig. 20 is a plan view illustrating the movable body 60.

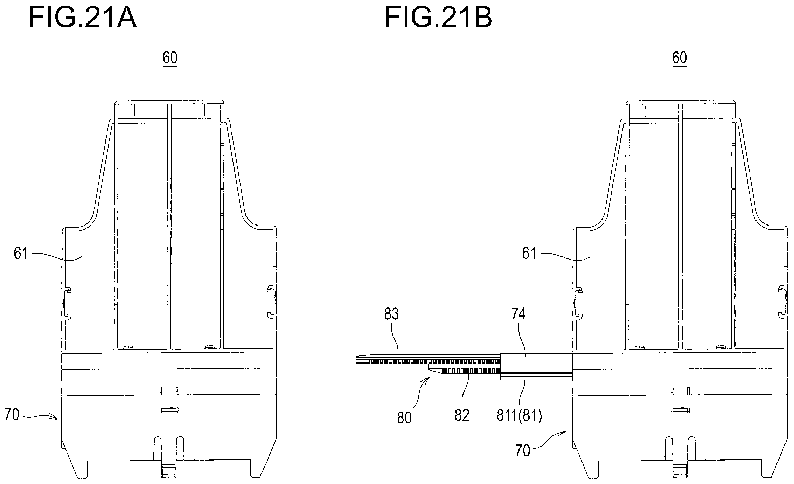

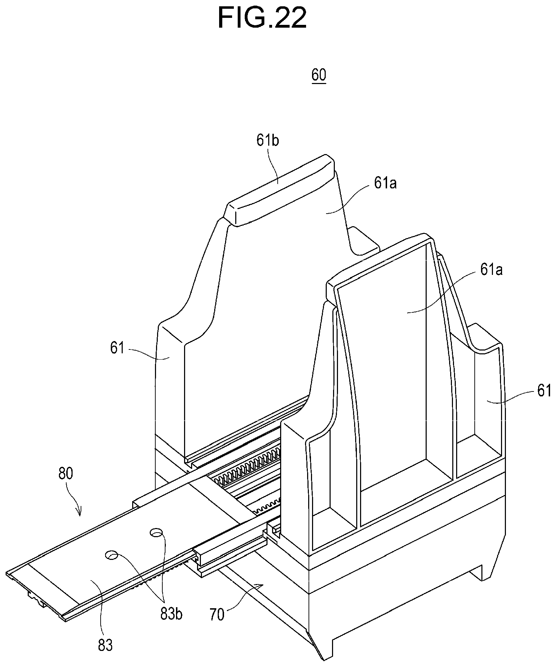

Figs. 21A and 21B are side views each illustrating the movable body 60. Of these drawings, Fig. 21A illustrates a state where an extending-retracting portion 80 is accommodated in a movable-body main body 70 of the movable body 60 (in a state where the extending-retracting portion 80 is retracted), and Fig. 21B illustrates a state where the extending-retracting portion 80 protrudes from the movable-body main body 70. Fig. 22 is a perspective view of the movable body 60, illustrating a state where the extending-retracting portion 80 protrudes from the movable-body main body 70.

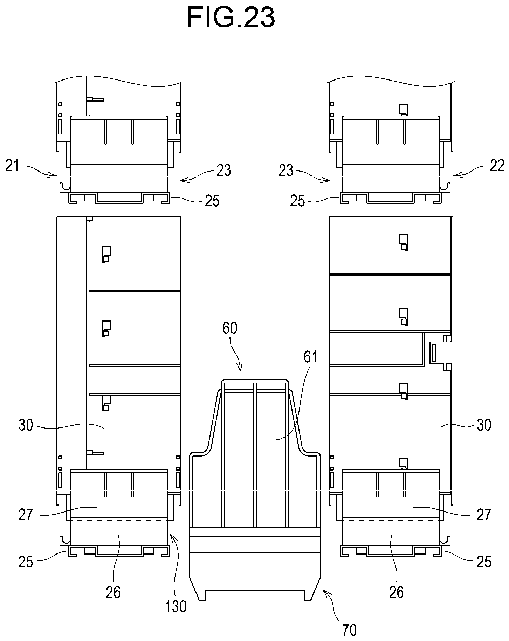

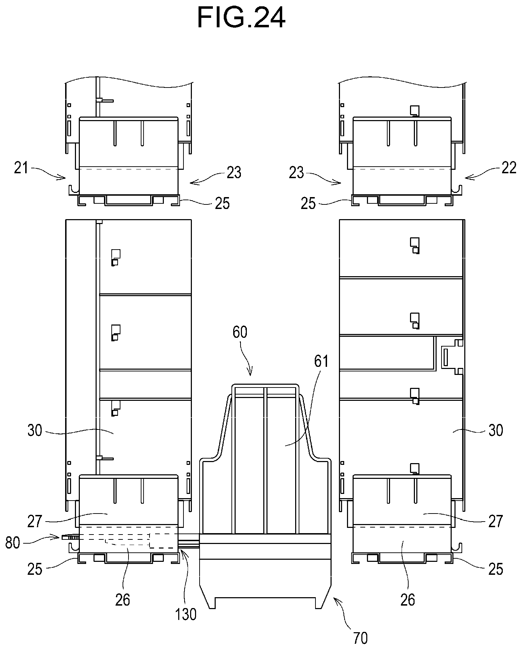

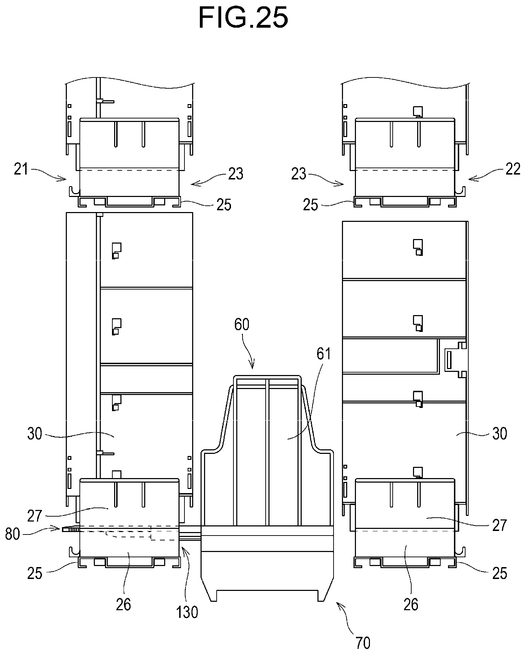

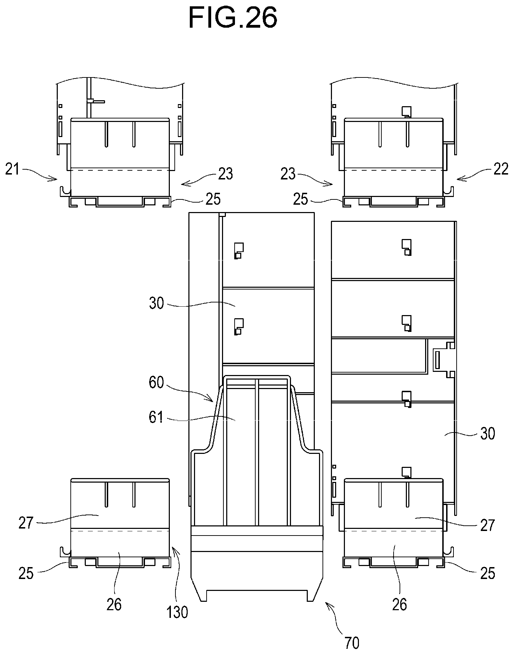

Figs. 23 to 26 are diagrams each illustrating a series of operations in which the magazine 30 is held with the movable body 60. Of these drawings, Fig. 23 illustrates a state where the movable body 60 is moved to a position where the movable body 60 is opposed to the magazine 30. Fig. 24 illustrates a state where the extending-retracting portion 80 protrudes from the movable-body main body 70. Fig. 25 illustrates a state where the movable body 60 relatively ascends with respect to the magazine 30. Fig. 26 illustrates a state where the extending-retracting portion 80 is accommodated in the movable-body main body 70.

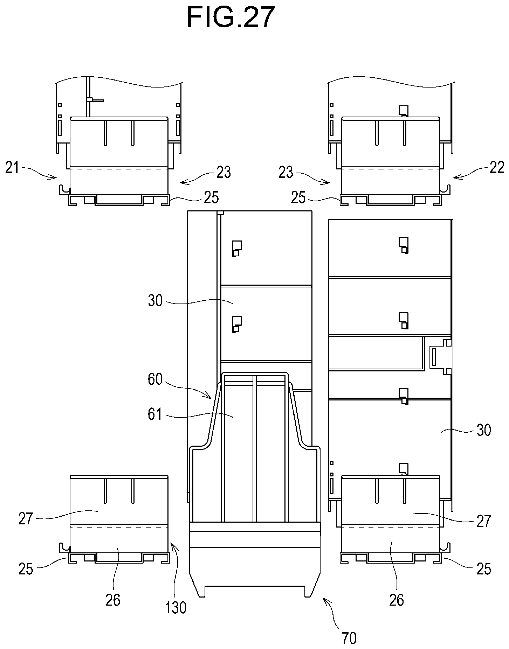

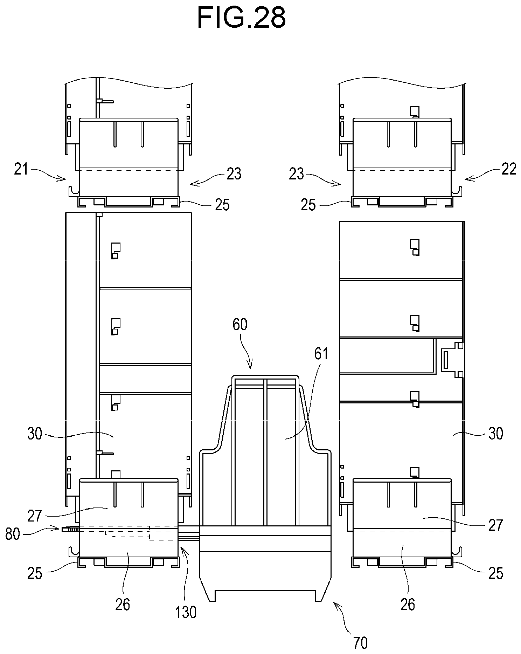

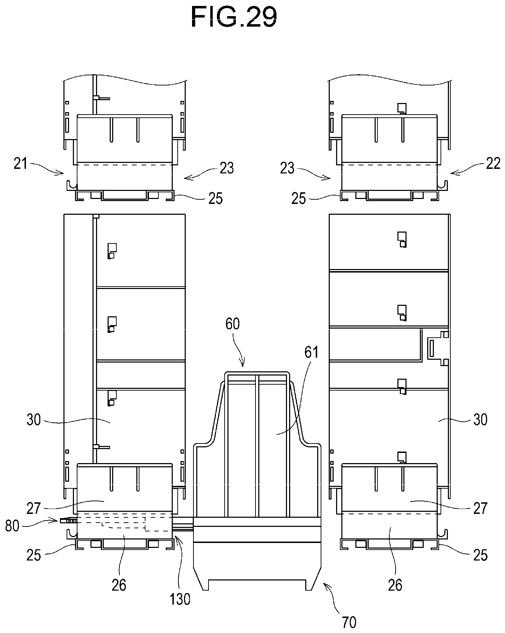

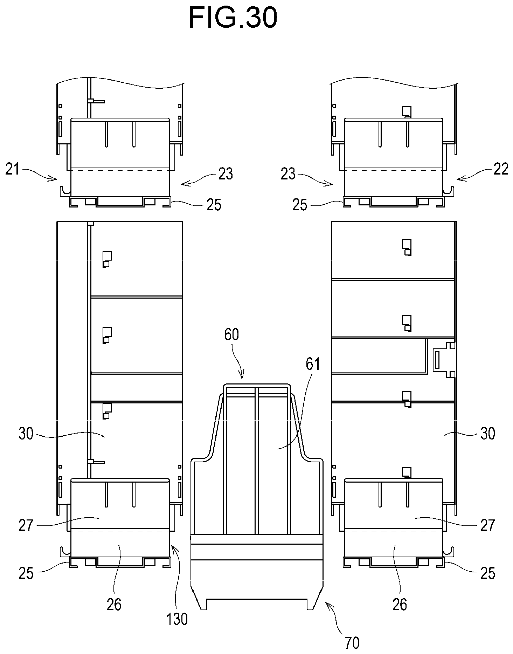

Figs. 27 to 30 are diagrams each illustrating a series of operations in which the magazine 30 is transferred to a magazine supporting portion 23 using the movable body 60. Of these drawings, Fig. 27 illustrates a state where the movable body 60 is moved to a position where the movable body 60 is opposed to the magazine 30. Fig. 28 illustrates a state where the extending-retracting portion 80 protrudes from the movable-body main body 70. Fig. 29 illustrates a state where the movable body 60 relatively descends with respect to the magazine supporting portion 23. Fig. 30 illustrates a state where the extending-retracting portion 80 is accommodated in the movable-body main body 70.

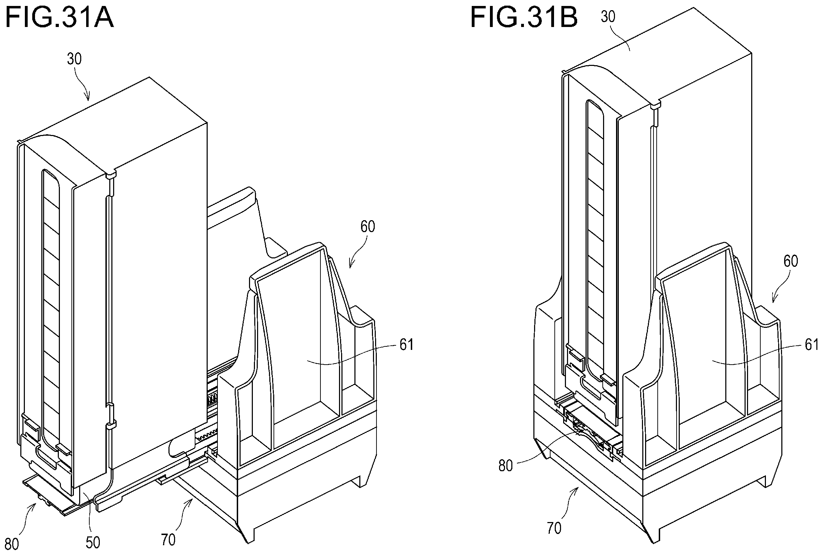

Figs. 31A and 31B are perspective views illustrating a state where the magazine 30 is held with the extending-retracting portion 80 of the movable body 60. Of these drawings, Fig. 31A illustrates a state where the extending-retracting portion 80 protrudes from the movable-body main body 70. Fig. 31B illustrates a state where the extending-retracting portion 80 is accommodated in the movable-body main body 70.

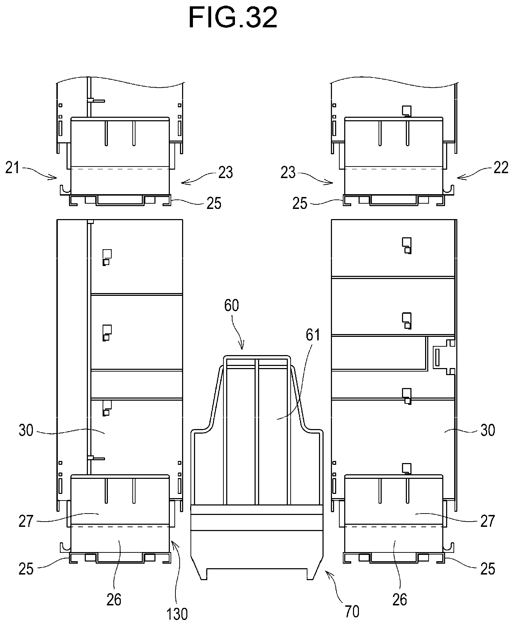

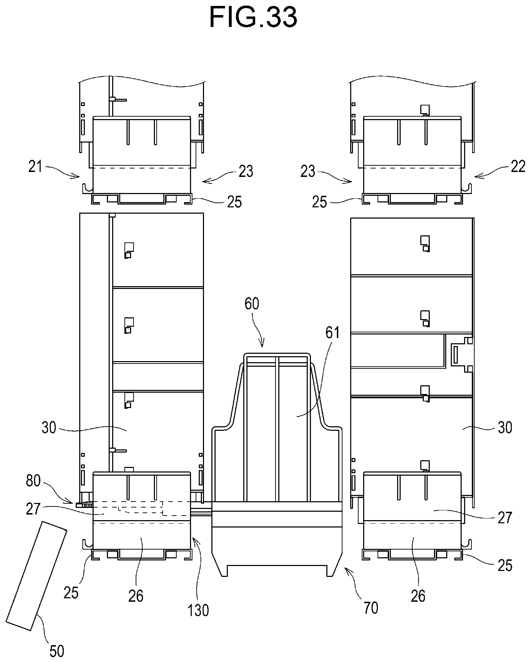

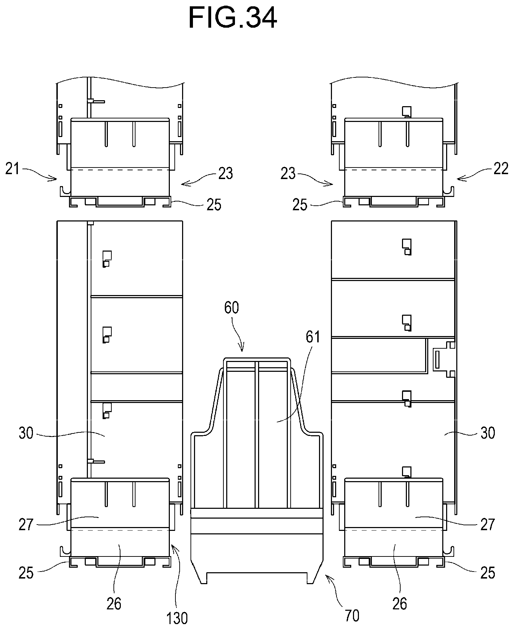

Figs. 32 to 34 are diagrams each illustrating a series of operations in which a product 50 is dispensed from the magazine 30 using the movable body 60 (dispensing mechanism). Of these drawings, Fig. 32 illustrates a state where the movable body 60 is moved to a position where the movable body 60 is opposed to the magazine 30. Fig. 33 illustrates a state where the extending-retracting portion 80 protrudes from the movable-body main body 70. Fig. 34 illustrates a state where the extending-retracting portion 80 is accommodated in the movable-body main body 70.

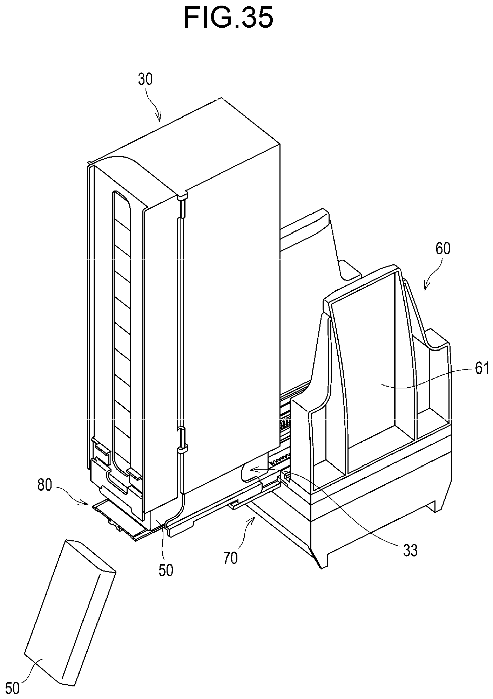

Fig. 35 is a perspective view illustrating a state where the product 50 has been dispensed from the magazine 30 using the movable body 60.

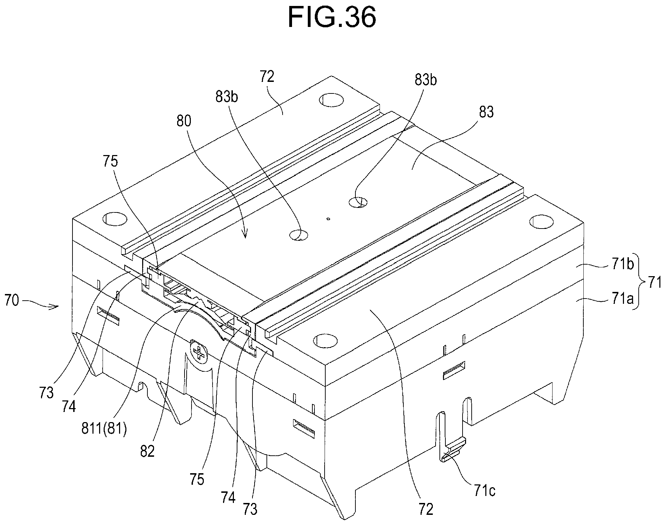

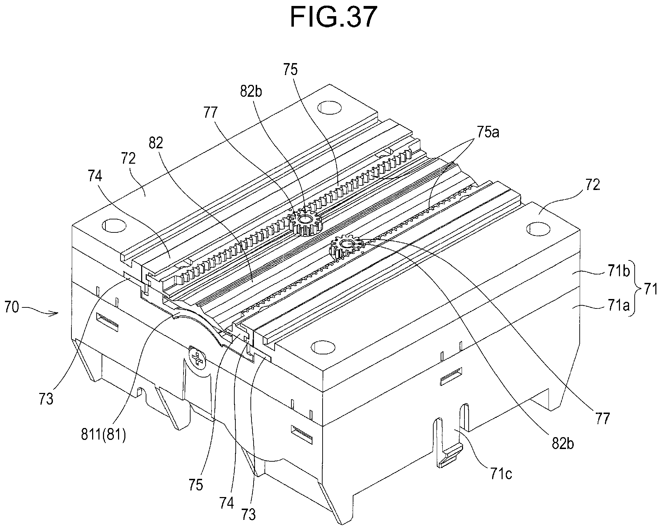

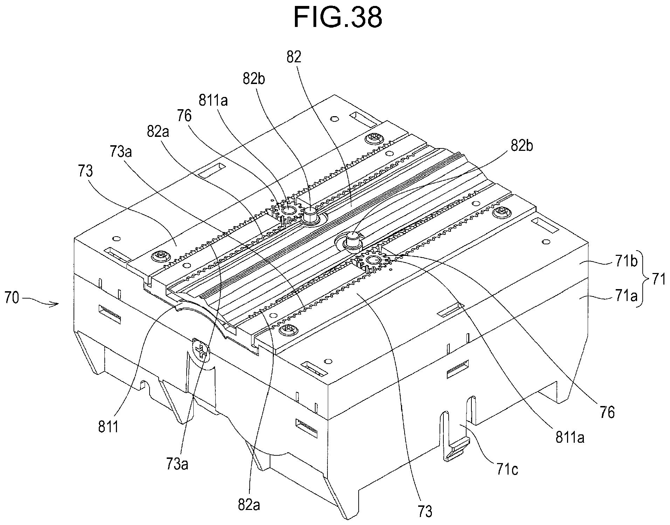

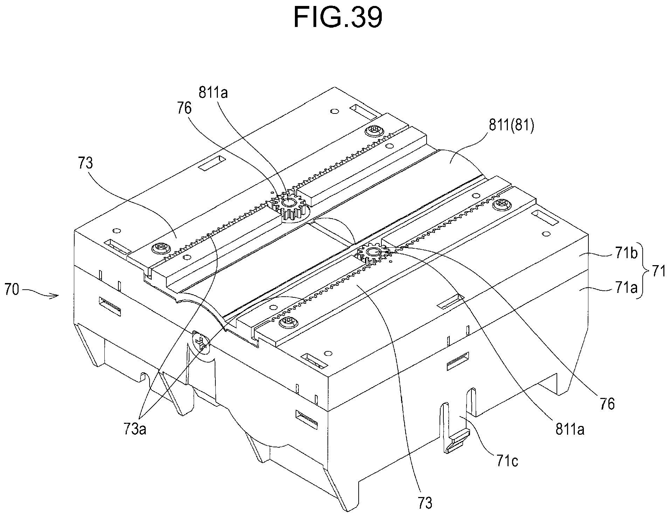

Figs. 36 to 39 are perspective views each illustrating a lower portion (the movable-body main body 70 and the extending-retracting portion 80) of the movable body 60. However, in Fig. 37, a third extending-retracting portion main body 83 is not shown. In addition, in Fig. 38, the third extending-retracting portion main body 83, a pair of left and right pinions 77, a pair of left and right fixing members 72, a pair of left and right guide members 74, and a pair of left and right rack members 75 are not shown. Furthermore, in Fig. 39, the third extending-retracting portion main body 83, the pair of left and right pinions 77, the pair of left and right fixing members 72, the pair of left and right guide members 74, the pair of left and right rack members 75, and a second extending-retracting portion main body 82 are not shown.

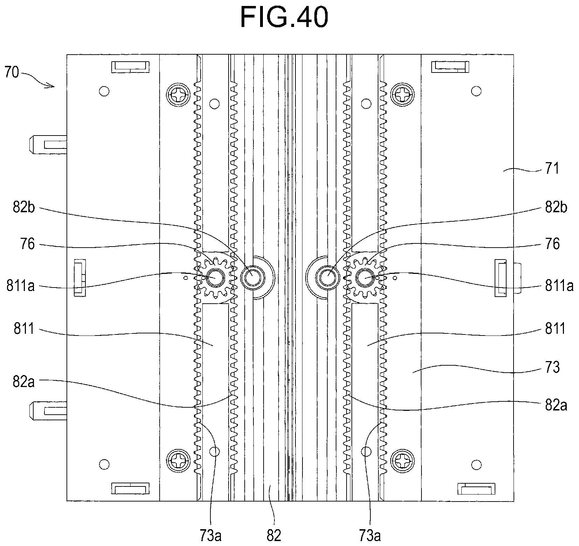

Fig. 40 is a plan view illustrating a lower portion of the movable body 60. However, in Fig. 40, the third extending-retracting portion main body 83, the pair of left and right pinions 77, the pair of left and right fixing members 72, the pair of left and right guide members 74, and the pair of left and right rack members 75 are not shown.

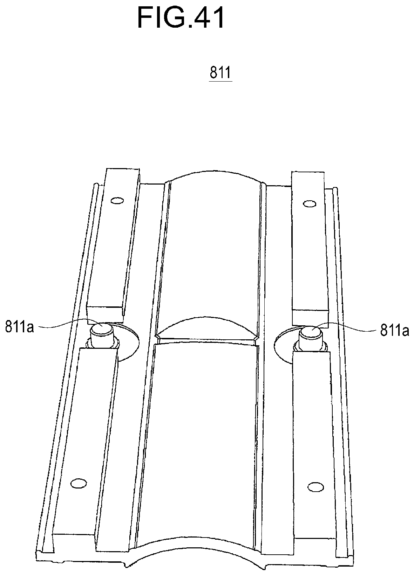

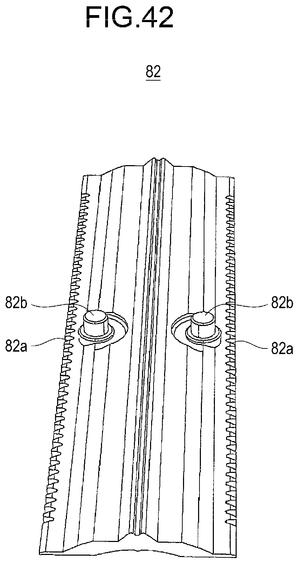

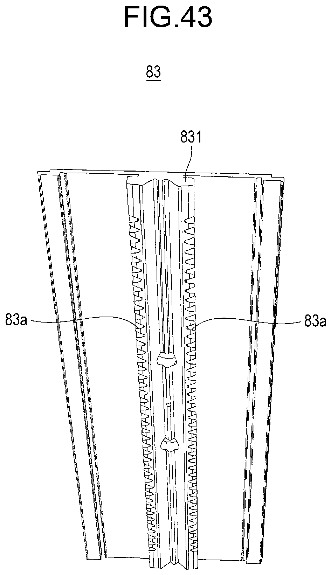

Fig. 41 is a perspective view illustrating a main body member 811 that constitutes an extending-retracting portion main body 81 of the extending-retracting portion 80. Fig. 42 is a perspective view illustrating the second extending-retracting portion main body 82 that constitutes the extending-retracting portion 80. Fig. 43 is a perspective view illustrating a lower surface side of the third extending-retracting portion main body 83 that constitutes the extending-retracting portion 80.

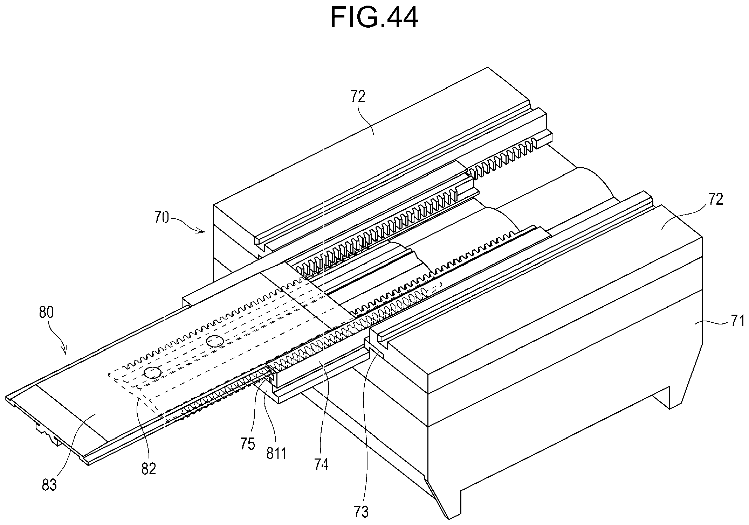

Fig. 44 is a perspective view illustrating a lower portion of the movable body 60 in a state where the extending-retracting portion 80 protrudes from the movable-body main body 70.

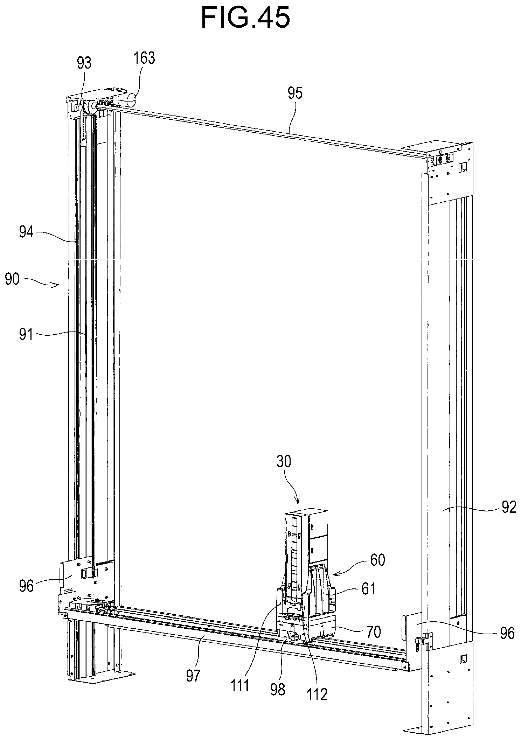

Fig. 45 is a perspective view illustrating the conveying mechanism (the movable body 60 and a movement mechanism 90) .

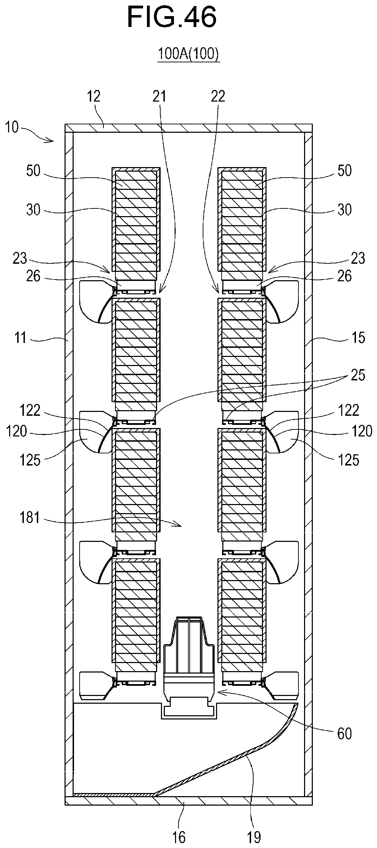

Fig. 46 is a side cross-sectional view illustrating the dispensing device 100.

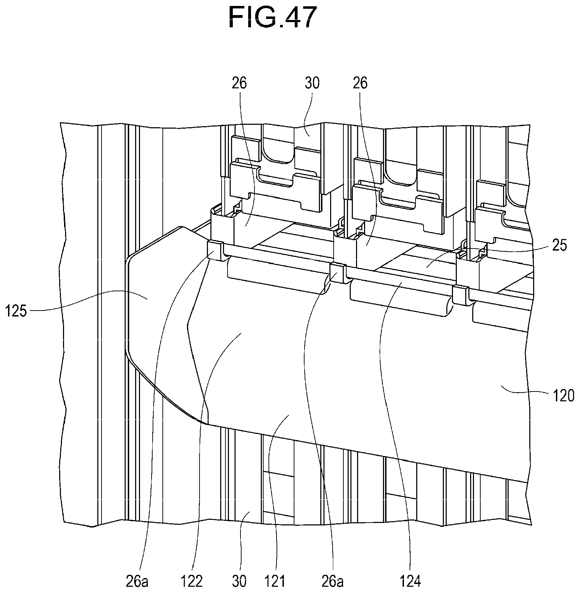

Fig. 47 is a perspective view illustrating a posture controlling member 120 and surrounding portions.

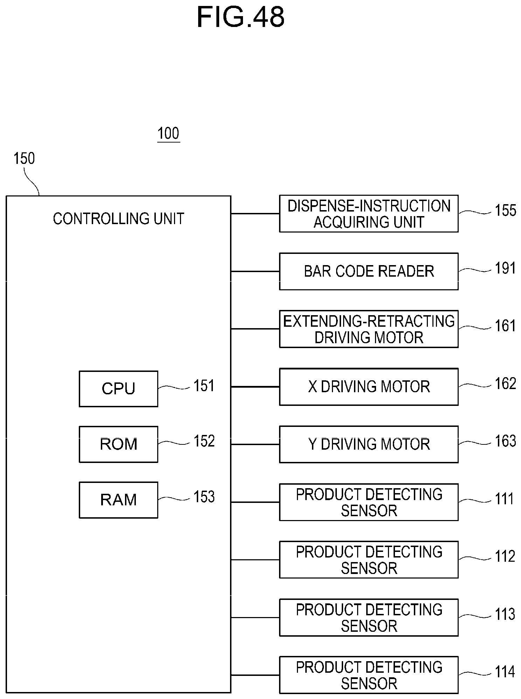

Fig. 48 is a block diagram concerning the dispensing device 100.

Various types of constituent elements according to the present invention do not necessarily have to be independent elements. It is accepted that one constituent element constitutes a portion of another constituent element, or a portion of one constituent element and a portion of another constituent element overlap with each other, or the like.

The dispensing device 100 according to this exemplary embodiment is a device that can dispense a product 50 (Fig. 3 or the like) to be dispensed. The dispensing device 100 includes: the magazine 30 (Figs. 2 and 3, or the like) that stores plural products 50 in a stacked state in the vertical direction; the storage shelf 21 (Fig. 3 or the like) that stores a plurality of the magazines 30; and the conveying mechanism that conveys the magazine 30. In the case of this exemplary embodiment, the conveying mechanism is configured to include the movable body 60 (Figs. 2 and 4, or the like) and the movement mechanism 90 (Fig. 45 or the like) . The dispensing device 100 further includes the dispensing mechanism that dispenses the product 50 (the conveying mechanism functions as the dispensing mechanism in the case of this exemplary embodiment) . The storage shelf 21 includes the installed-magazine mounting portion 24 (Figs. 3 and 10) at which the magazine 30 is installed and mounted, and the magazine supporting portion 23 (Figs. 3 and 4, or the like) that supports a plurality of the magazines 30. The installed-magazine mounting portion 24 is a position at which an operator for the dispensing device 100 installs and places the magazine 30 within the dispensing device 100. The dispensing mechanism is configured to dispense the product 50 from the magazine 30 supported with the magazine supporting portion 23. The conveying mechanism conveys the magazine 30 between the installed-magazine mounting portion 24 and the magazine supporting portion 23.

With the dispensing device 100, it is possible to cause the magazine supporting portion 23 of the storage shelf 21 to support a plurality of the magazines 30 that each store a plurality of products 50, and also possible to use the dispensing mechanism to automatically dispense a product 50 to be dispensed, from a magazine 30 supported with the magazine supporting portion 23.

Furthermore, it is also possible to use the conveying mechanism to convey a magazine 30 in which a product 50 has been reloaded, from the installed-magazine mounting portion 24 to the magazine supporting portion 23, or convey a magazine 30 that needs a product 50 to be reloaded, from the magazine supporting portion 23 to the installed-magazine mounting portion 24. This makes it possible to favorably reload the product 50.

Here, description will be made of an example in which the product 50 is a tobacco product in the case of this exemplary embodiment. The "tobacco product" means a package having a cuboid shape and storing a plurality of cigarettes or a package having a cuboid shape and storing other tobacco products other than a cigarette, rather than meaning an individual cigarette provided to smoke. The other tobacco products include snuff, pipe tobacco, and related products such as an inhalation tool used for these other tobacco products.

However, in the present invention, the product 50 to be dispensed is not limited to a tobacco product, and may be, for example, a food such as confectionery packed in a box-shaped package similar to a tobacco package, a compact disk (CD), a digital versatile disk (DVD), a Blu-ray disk (BD), or the like.

Furthermore, the magazine 30 does not always store plural products 50. There may exist a magazine 30 that store only one (single) product 50, or a magazine 30 that store no product 50.

In this exemplary embodiment, for example, the dispensing device 100 does not have a processing device for money (currency, electronic money, or the like). A process (monetary processing) concerning payment for a consideration for a product 50 that has been dispensed is performed, for example, using a selling processing device such as an electronic cash register installed separately from the dispensing device 100.

However, in the present invention, the dispensing device 100 may be an automatic vending machine that includes a processing device for money (currency, electronic money, or the like).

The dispensing device 100 is installed, for example, on a sales counter in a convenience store or other shop. However, the dispensing device 100 may be installed at other locations.

The dispensing device 100 is operated, for example, by a sales clerk. However, this operation may be performed by a purchaser.

The storage shelf 21 stores plural magazines 30 in a plural-array manner in the vertical direction and a plural-array manner in the horizontal direction.

As one example, the storage shelf 21 stores magazines 30 on four columns in the vertical direction, as illustrated in Fig. 3. For example, it is possible to arrange and store 15 pieces of magazines 30 in the left and right direction on each of the uppermost column and the second column from the top of the storage shelf 21. In addition, for example, it is possible to arrange and store 12 pieces of magazines in the left and right direction on each of the third column from the top and the lowermost column of the storage shelf 21.

In Fig. 3, three magazines 30 of the magazines 30 stored in a second storage shelf 22 are shown in the right portion on the third column from the top of the storage shelf 21. In addition, in Fig. 3, a magazine 30 installed at the installed-magazine mounting portion 24 and two magazines 30 of the magazines 30 stored in the second storage shelf 22 are shown in the right portion on the lowermost column of the storage shelf 21.

In the case of this exemplary embodiment, the conveying mechanism includes the movable body 60 that holds the magazine 30 and moves. The movable body 60 can move between a first handover position 141 (Fig. 3) and a second handover position, the first handover position 141 being a position where a magazine 30 can be handed over between this movable body 60 and the installed-magazine mounting portion 24, the second handover position being a position where a magazine 30 can be handed over between the movable body 60 and the magazine supporting portion 23.

Here, the second handover position is a position that is opposed to a magazine 30 supported with the magazine supporting portion 23 of the storage shelf 21, or a position that is opposed to a magazine 30 supported with the magazine supporting portion 23 of the second storage shelf 22 that will be described later.

In the case of this exemplary embodiment, the dispensing device 100 includes the second storage shelf 22 including the magazine supporting portion 23 and disposed so as to be opposed to the storage shelf 21. In addition, the movable body 60 can move vertically and horizontally (in the left and right direction in the case of this exemplary embodiment) in a movement region 181 (Figs. 2 and 46) between the storage shelf 21 and the second storage shelf 22.

Furthermore, even in a state of holding the magazine 30, the movable body 60 can move in the movement region 181 vertically as well as in the left and right direction.

The conveying mechanism can convey the magazine 30 from a common installed-magazine mounting portion 24 to the magazine supporting portion 23 of the storage shelf 21 and also to the magazine supporting portion 23 of the second storage shelf 22. In addition, the conveying mechanism can convey the magazine 30 to a common installed-magazine mounting portion 24 both from the magazine supporting portion 23 of the storage shelf 21 and from the magazine supporting portion 23 of the second storage shelf 22.

The dispensing device 100 includes the housing 10. The storage shelf 21, the second storage shelf 22, and the conveying mechanism (the movable body 60 and the movement mechanism 90) are disposed in the housing 10. The housing 10 is formed into a cuboid shape having, for example, the front surface wall 11, the top plate portion 12, a left side wall 13, a right side wall 14, a back surface wall 15, and a bottom plate portion 16.

The front surface wall 11 includes an installation port 17a (Fig. 10) serving as an opening used to install the magazine 30 from the front of the housing 10 onto the installed-magazine mounting portion 24. The front surface wall 11 is provided with an open-close door 17 used to open and close the installation port 17a. The open-close door 17 is connected to the front surface wall 11 with one of side edge portions of the open-close door 17 being connected to the front surface wall 11 through a hinge. The open-close door 17 can switch between an opened state where the magazine 30 can be inserted into and taken out from the installed-magazine mounting portion 24 and a closed state where the magazine 30 cannot be inserted into and taken out from the installed-magazine mounting portion 24.

A pick-up opening 18 serving as an opening that allows a product 50 dispensed from the magazine 30 to be picked up toward the front of the housing 10 is formed in the lower portion of the front surface wall 11. A chute 19 that guides downward the product 50 that has been dispensed from the magazine 30 toward the pick-up position 20 is provided on the lower portion of the inside of the housing 10. The pick-up position 20 is, for example, a flat portion provided at a lower end portion of the chute 19, and is disposed at a position that can be easily accessed from the outside of the housing 10 through the pick-up opening 18.

As illustrated in Figs. 2 and 3, a guide plate 171 that guides the product 50 toward the left and downward is disposed at a position above the installed-magazine mounting portion 24. Thus, in a case where the product 50 is dispensed from the magazine 30 disposed above the installed-magazine mounting portion 24, it is possible to suppress falling of the product 50 onto the installed-magazine mounting portion 24.

The guide plate 171 includes, for example, an erected plate portion 171a disposed vertically, and a sloped plate portion 171b sloped downward toward the left.

As described above, the storage shelf 21 stores plural magazines 30 in a plural-array manner in the vertical direction and a plural-array manner in the left and right direction. The storage shelf 21 is disposed at the front portion of the housing 10.

The storage shelf 21 is configured to include plural columns (for example, four columns) of shelf plates 25 (see Fig. 46) that support the magazines 30 through a magazine receiving portion 26 that will be described later, and also include a frame body that supports these shelf plates 25. Each of the shelf plates 25 extends in the left and right direction.

The installed-magazine mounting portion 24 is disposed, for example, in a region of a part of the lowermost shelf plate 25 (for example, in a right end portion of this shelf plate 25) of the storage shelf 21.

The second storage shelf 22 generally has a configuration similar to that of the storage shelf 21, and is disposed in a rear portion of the housing 10. As illustrated in Fig. 5, the second storage shelf 22 includes, for example, four columns of shelf plates 25, and a frame body that supports these shelf plates 25. Each of the shelf plates 25 extends in a left and right direction. Each of the columns of the storage shelfs 21 can store 15 pieces of magazines 30 arranged in the left and right direction.

In the case of this exemplary embodiment, one magazine 30 stores products 50 with the same brand. In addition, each magazine 30 stores a different brand of products 50 from each other. However, there may exist plural magazines 30 that store the same brand of products 50.

The dispensing mechanism dispenses a product 50 to be dispensed, from a magazine 30 that store the target product 50.

As illustrated in Fig. 6, plural magazine receiving portions 26 that support the magazine 30 are provided on the shelf plate 25. In the case of this exemplary embodiment, the magazine receiving portions 26 each have a trapezoid shape provided in a state of protruding further upward than the upper surface of the shelf plate 25. In addition, the magazine receiving portions 26 are disposed at predetermined intervals (for example, at constant intervals) in the left and right direction. As illustrated in Figs. 7 and 8, one magazine 30 is supported with a pair of magazine receiving portions 26 adjacent to each other. That is, a left end portion of the lower end of a magazine 30 is supported with a magazine receiving portion 26 on the left side, whereas a right end portion of the lower end of the magazine 30 is supported with a magazine receiving portion 26 on the right side.

This makes it possible to secure an inserting space 130 for an extending-retracting portion 80 (that will be described later) of the movable body 60 between the upper surface of the shelf plate 25 and the bottom surface of the magazine 30.

The magazine supporting portion 23 is configured to include the shelf plate 25 and the magazine receiving portion 26. That is, the magazine supporting portion 23 includes the magazine receiving portion 26 that supports the magazine 30 in a state where an inserting space for the extending-retracting portion 80 is secured below the bottom surface of the magazine 30.

One magazine receiving portion 26 is shared to support two magazines 30 disposed adjacent to each other. That is, each magazine receiving portion 26 supports a right end portion of a lower end of a magazine 30 located on the left with respect to the magazine receiving portion 26 and also supports a left end portion of a lower end of a magazine 30 located on the right with respect to the magazine receiving portion 26.

A storage space for each magazine 30 is formed between two adjacent magazine receiving portions 26. For example, 15 pieces of storage spaces are formed in each of the uppermost column and the second column from the top of the storage shelf 21. For example, 12 pieces of storage spaces are formed in each of the lowermost column and the third column from the top of the storage shelf 21. In addition, for example, 15 pieces of storage spaces are formed in each column of the second storage shelf 22.

The magazine supporting portion 23 further includes a magazine guiding portion 27 that is erected from a central portion of the magazine receiving portion 26 in a left-righ width direction. Furthermore, as illustrated in Fig. 7, a pair of magazine guiding portions 27 are each brought close to or brought into contact with either of left and right side surfaces of the magazine 30.

That is, the magazine supporting portion 23 includes the pair of magazine guiding portions 27 that are erected from the magazine receiving portion 26 and are disposed so as to be opposed to each other. In a state where the magazine 30 is supported with the magazine receiving portion 26, the pair of magazine guiding portions 27 are each brought close to or brought into contact with either of both side surfaces of the magazine 30.

This makes it possible to stably support the magazine 30 with the magazine supporting portion 23.

Each of the magazine guiding portions 27 includes, for example, an erected wall portion 27a that is erected from the magazine receiving portion 26, and a pair of protruding portions 27b that are formed on the upper end portion of the erected wall portion 27a and each protrude toward the left and right. In other words, the magazine guiding portion 27 is formed into a shape of a letter T, as illustrated in Fig. 7.

Thus, the upper end portions of the pair of magazine guiding portions 27 located adjacently on the left and right of a magazine 30 each have the protruding portion 27b that protrudes toward each other.

Furthermore, each of the protruding portions 27b of the pair of magazine guiding portions 27 located adjacently on the left and right of the magazine 30 is brought close to or brought into contact with either of the left and right side surfaces of the magazine 30.

This makes it possible to stably support the magazine 30 with the magazine supporting portion 23. In addition, in a case where the lower portion of the magazine 30 includes a portion that protrudes in the horizontal direction (left and right direction), it is possible to suppress interference between the protruding portion and the erected wall portion 27a.

As illustrated in Fig. 9, the protruding portion 27b of each of the pair of magazine guiding portions 27 has a central portion in an extending-retracting direction (front-rear direction in the case of this exemplary embodiment) of the extending-retracting portion 80 that will be described later, and this central portion more protrudes toward each other as compared with both end portions of the protruding portion 27b in the extending-retracting direction. Thus, when the magazine 30 held with the extending-retracting portion 80 is moved in the horizontal direction (in the front-rear direction) to cause the magazine receiving portion 26 to support the magazine 30, or when the magazine 30 supported with the magazine receiving portion 26 is moved in the horizontal direction (in the front-rear direction) to pick it up from the magazine supporting portion 23, it is possible to suppress interference between the magazine 30 and the protruding portion 27b, which makes it possible to smoothly move the magazine 30.

As illustrated in Fig. 10, the installed-magazine mounting portion 24 is disposed on the back of the installation port 17a. The installed-magazine mounting portion 24 has a structure similar to that of the magazine supporting portion 23. The installed-magazine mounting portion 24 includes a pair of magazine receiving portions 26 provided on the shelf plate 25, and the magazine guiding portion 27 formed on each magazine receiving portion 26.

Furthermore, Fig. 10 illustrates an example in which one installed-magazine mounting portion 24 is disposed on the back of the installation port 17a. However, plural installed-magazine mounting portions 24 may be disposed side by side on the back of the installation port 17a. As one example, six installed-magazine mounting portions 24 are disposed side by side.

In addition, in a case where plural installed-magazine mounting portions 24 are disposed on the back of the installation port 17a, it is preferable that a notification displaying unit be provided so as to correspond to each installed-magazine mounting portion 24, the notification displaying unit indicating which installed-magazine mounting portion 24 includes a magazine 30 for which a product 50 should be reloaded. As one example, an LED for notification is provided at a position corresponding to each installed-magazine mounting portion 24. It is configured to selectively emit or make blink an LED corresponding to an installed-magazine mounting portion 24 that includes a magazine 30 for which a product 50 should be reloaded.

An operator of the dispensing device 100 loads a product 50 in a magazine 30, and installs the magazine 30 at the installed-magazine mounting portion 24 through the installation port 17a, as illustrated in Fig. 10. That is, at the installed-magazine mounting portion 24, the magazine 30 is supported with the pair of magazine receiving portions 26, as is the case where the magazine 30 is supported with the pair of magazine receiving portions 26 at the magazine supporting portion 23.

Here, a structure of the magazine 30 will be described with reference to Figs. 11 to 17D.

The magazine 30 includes, for example, a box main body portion 31, and a box lid portion 32 that is pivotally supported so as to be able to open and close with respect to the box main body portion 31. Furthermore, the box main body portion 31 and the box lid portion 32 constitute a magazine main body.

As illustrated in Figs. 16A and 16B, the box main body portion 31 has a box type having a cuboid shape, into or from which plural (for example, equal to or more than 10 pieces) products 50 can be collectively put or taken out.

More specifically, the box main body portion 31 has a box shape having a pair of side surfaces, a front surface (see Fig. 8), a top surface, and a bottom surface, and the back surface side thereof is opened. The magazine 30 may be disposed so that either the front surface or the back surface faces the front of the dispensing device 100. As illustrated in Fig. 2 or the like, the magazine 30 may be disposed in the storage shelf 21, the second storage shelf 22, and the installed-magazine mounting portion 24 in a manner such that the front surface of the magazine 30 faces the movement region 181 side. Alternatively, the magazine 30 may be disposed in the storage shelf 21, the second storage shelf 22, and the installed-magazine mounting portion 24 in a manner such that the back surface of the magazine 30, that is, a surface having the box lid portion 32 faces the movement region 181 side.

Meanwhile, the box lid portion 32 is pivotally supported through a hinge with respect to the box main body portion 31, and can be opened and closed between a state where the back surface of the box main body portion 31 is closed (Fig. 16C) and a state where the back surface is opened (Figs. 16A and 16B) .

Each of Figs. 16A to 16C illustrates a state where the magazine 30 lies. However, the magazine 30 is vertically disposed as illustrated in Fig. 11 or the like, and stores, therein, plural products 50 in a stacked state.

Here, the product 50 is typically formed into a flattened cuboid shape having a front surface, a back surface, a pair of side surfaces, a top surface, and a bottom surface. Where a backward direction represents a direction from the front surface of the product 50 toward the back surface, and a top-bottom direction represents a direction from the top surface toward the bottom surface, the backward direction of each product 50 matches a vertical direction of the magazine 30. Plural products 50 are stored in a state where these plural products 50 are arranged vertically with the top-bottom direction of each of the products 50 being directed in the front-rear direction (see Figs. 12, 13, and 15).

Plural products 50 are inserted into the box main body portion 31 as illustrated Fig. 16B in a state where the box lid portion 32 is opened as illustrated in Fig. 16A. After this, the box lid portion 32 is closed as illustrated in Fig. 16C. This makes it possible to perform a loading operation of the products 50 into the magazine 30.

A discharging port 33 that allows a product 50 on the lowermost column in a magazine 30 to be dispensed is formed in the front and rear of the lower end portion of the magazine 30 as illustrated in Fig. 11.

In the case of this exemplary embodiment, the extending-retracting portion 80 included in the movable body 60 horizontally pushes out a product 50 from the magazine 30 to dispense the product 50, as described later. That is, the extending-retracting portion 80 is inserted into the magazine 30 from one of discharging ports 33. The tip end of the extending-retracting portion 80 presses the product 50 to push out this product 50, which makes it possible to perform an operation of dispensing the product 50 from the other discharging port 33.

However, only one discharging port 33 may be formed on either the front or the rear of the magazine 30, as long as the extending-retracting portion 80 can be inserted into the magazine 30 in order to dispense a product 50 on the lowermost column in the magazine 30.

As described above, the magazine 30 includes a box-shaped magazine main body (configured with the box main body portion 31 and the box lid portion 32) having a cuboid shape and having the discharging port 33 for the product 50. In addition, the magazine 30 can store plural products 50 within the magazine main body. The discharging port 33 is disposed at a position corresponding to a product at the lowermost column of products 50 stored within the magazine main body. The dispensing mechanism dispenses the product 50 at the lowermost column within the magazine main body through the discharging port 33.

Here, the magazine 30 includes an adjusting mechanism that allows an opening area of the discharging port 33 to be adjusted in accordance with the size of a product 50 stored in the magazine main body. More specifically, the adjusting mechanism is used to adjust the height size of the discharging port 33.

This adjusting mechanism is configured to include a sliding member 37 provided so as to be able to slide with respect to the magazine main body.

In the case of this exemplary embodiment, the sliding member 37 is provided at the lower end portion of the front surface of the box main body portion 31 and the lower end portion of the box lid portion 32.

The sliding member 37 can move vertically in a sliding manner with respect to the box main body portion 31 or the box lid portion 32.

For example, the sliding member 37 is formed into a plate shape, and includes a pair of left and right fitting pins 37a and a pair of left and right slide pins 37b. As illustrated in Fig. 14, the sliding member 37 includes a base portion 38, and a pair of left and right swing portions 39 that are connected to the upper side of the base portion 38 through a bending portion 37c having a constricted shape.

A swing portion 39 is connected through one bending portion 37c to an upper edge of the right end portion of the base portion 38. In addition, a swing portion 39 is connected through the other bending portion 37c to an upper edge of the left end portion of the base portion 38.

A fitting pin 37a is formed on the left and right swing portions 39. The fitting pin 37a on the right swing portion 39 protrudes toward the right from the upper end portion of this swing portion 39. The fitting pin 37a on the left swing portion 39 protrudes toward the left from the upper end portion of this swing portion 39.

A slide pin 37b protrudes from the upper end portion of the base portion 38 toward the left and right.

As illustrated in Fig. 11, a pair of left and right upper-side fitting holes 36a, a pair of left and right lower-side fitting holes 36b, and a pair of left and right slide holes 36c are formed in the lower end portion of the box lid portion 32, the upper-side fitting holes 36a each allowing the fitting pin 37a to be fitted, the fitting holes 36b each allowing the fitting pin 37a to be fitted, and the slide holes 36c each vertically guiding the slide pin 37b.

Similarly, a pair of left and right upper-side fitting holes 36a, a pair of left and right lower-side fitting holes 36b, and a pair of left and right slide holes 36c are formed in the lower end portion of the front surface of the box main body portion 31.

The lower-side fitting holes 36b are disposed lower than the upper-side fitting holes 36a. The slide hole 36c is an elongated hole extending vertically.

The pair of fitting pins 37a of the sliding member 37 can be fitted into the pair of upper-side fitting holes 36a or the pair of lower-side fitting holes 36b. Fig. 11 illustrates a state where the pair of fitting pins 37a are respectively fitted into the pair of lower-side fitting holes 36b, and the height position of the sliding member 37 is "low. " At this time, the height size of the discharging port 33 is "small" (see Fig. 15).

In addition, Fig. 12 illustrates a state where the pair of fitting pins 37a are respectively fitted into the pair of upper-side fitting holes 36a. In this case, the height position of the sliding member 37 is "high," and the height size of the discharging port 33 is "large" (see Fig. 13).

In the case of this exemplary embodiment, the height size of the discharging port 33 is set to "large" or "small" depending on the depth size of the product 50. This makes it possible to favorably dispense products 50 with various depth sizes from the discharging port 33 on a one by one basis.

Switch between the state where the pair of fitting pins 37a of the sliding member 37 are fitted into the pair of upper-side fitting holes 36a and the state where the pair of fitting pins 37a are fitted into the pair of lower-side fitting holes 36b can be achieved, for example, in the following manner.

Here, description will be made of a switch from a state where the pair of fitting pins 37a are fitted into the pair of lower-side fitting holes 36b as illustrated in Fig. 11, to a state where the pair of fitting pins 37a are fitted into the pair of upper-side fitting holes 36a as illustrated in Fig. 12.

First, each of the left and right swing portions 39 is relatively pushed downward with respect to the base portion 38 so that the center side of each of the left and right swing portions 39 moves downward. For example, it may be possible to pinch the sliding member 37 with a left hand so that the upper edge and the lower edge of the left half portion of the sliding member 37 are brought close to each other, while pinching the sliding member 37 with a right hand so that the upper edge and the lower edge of the right half portion of the sliding member 37 are brought close to each other. This causes the left and right bending portions 37c to be each bent, and also causes the left and right swing portions 39 to each swing with respect to the base portion 38, which enables each of the pair of fitting pins 37a to be detached from the lower-side fitting hole 36b. This makes it possible for the slide pin 37b to move along the slide hole 36c in a sliding manner.

Next, the sliding member 37 is caused to move upward. That is, the slide pin 37b is caused to slide upward along the slide hole 36c.

Next, the force that pushes each of the swing portions 39 downward is removed to fit the pair of fitting pins 37a into the pair of upper-side fitting holes 36a.

In this manner, it is possible to switch from the state in Fig. 11 to the state in Fig. 12.

The dispensing device 100 includes a spacer member that is disposed within the magazine main body in accordance with the size of a product 50 stored in the magazine main body, and fills the space between the inner wall of the magazine main body and the product 50.

This makes it possible to stably hold a product 50 in the magazine 30, and suppress a wobble of the product 50 within the magazine 30.

In the case of this exemplary embodiment, the dispensing device 100 includes four types of spacer members including a pair of left and right first side spacer members 41 (Figs. 17B and 17C), a pair of left and right second side spacer members 42 (Fig. 17B), a front-side spacer member 43, and a rear-side spacer member 44. One or more types of these spacer members are provided in the magazine main body as necessary, and the provided spacer member or spacer members can be used.

Fig. 17A illustrates a case in which a long-sized product 50 is stored in a magazine 30, and no spacer member is provided in the magazine 30.

Fig. 17B illustrates a case in which a slim product 50 is stored in a magazine 30, and the pair of left and right first side spacer members 41 and the pair of left and right second side spacer members 42 are provided in the magazine 30.

Fig. 17C illustrates a case in which a compact-sized product 50 is stored in a magazine 30, and the front-side spacer member 43, the rear-side spacer member 44, and the pair of left and right first side spacer members 41 are provided in the magazine 30.

Fig. 17D illustrates a case in which a product 50 having a normal size is stored in a magazine 30, and the front-side spacer member 43 and the rear-side spacer member 44 are provided in the magazine 30.

For example, a locking hole 34 (Fig. 11) that allows the spacer member to be locked and installed is formed in the box main body portion 31 and the box lid portion 32.

Next, the movable body 60 will be described with reference to Figs. 18 to 44.

The movable body 60 includes the movable-body main body 70 (Fig. 36) that can move vertically and horizontally, and also includes the extending-retracting portion 80 (see Figs. 21A, 21B, and 22) that can extend and retract with respect to the movable-body main body 70 and in an extending-retracting direction extending horizontally, the extending-retracting direction intersecting a direction in which the movable-body main body 70 moves horizontally. In the case of this exemplary embodiment, the movable-body main body 70 can move vertically as well as in the left and right direction. In addition, the extending-retracting portion 80 can extend and retract back and forth with respect to the movable-body main body 70.

The conveying mechanism causes the extending-retracting portion 80 to relatively ascend with respect to the installed-magazine mounting portion 24 or the magazine supporting portion 23 in a state (Fig. 22) where the extending-retracting portion 80 is caused to protrude from the movable-body main body 70, thereby holding the magazine 30 with the extending-retracting portion 80. Fig. 31A illustrates a state where a magazine 30 is held with the extending-retracting portion 80 in a state where the extending-retracting portion 80 protrudes from the movable-body main body 70.

In addition, the conveying mechanism moves the movable-body main body 70 in a state where a magazine 30 is held with the extending-retracting portion 80, thereby moving the magazine 30 between the first handover position 141 and the second handover position.

The movable body 60 is configured to hold the magazine 30 with the bottom surface of the box main body portion 31 being supported from below with the extending-retracting portion 80.

Here, a protrusion 35 that protrudes downward is formed on the bottom surface of the box main body portion 31, as illustrated in Fig. 12 or the like. The protrusion 35 is formed, for example, into a tapering shape such as an inverted frustum shape. As one example, a pair of front and rear protrusions 35 are formed on the box main body portion 31.

Furthermore, the third extending-retracting portion main body 83 (that will be described later) that constitutes the extending-retracting portion 80 includes a hole 83b (Fig. 22) into which each of the protrusions 35 is fitted at the time of holding the magazine 30 with the third extending-retracting portion main body 83. The hole 83b is also formed, for example, into a tapering shape such as an inverted frustum shape.

With the protrusion 35 of the magazine 30 being fitted into the hole 83b of the extending-retracting portion 80, it is possible to more stably hold the magazine 30 with the extending-retracting portion 80.

This exemplary embodiment gives an example in which the protrusion 35 is formed on the magazine 30 and the hole 83b is formed in the extending-retracting portion 80. However, conversely, the hole may be formed in the magazine 30 and the protrusion may be formed on the extending-retracting portion 80. In addition, it may be possible to employ a configuration in which the magazine 30 includes a protrusion as well as a hole, whereas the extending-retracting portion 80 includes a hole and a protrusion, with which the protrusion and the hole of the magazine 30 are fitted.

As described above, in a state where the magazine 30 is held with the extending-retracting portion 80, the protrusion or hole (the protrusion 35 in this exemplary embodiment) formed on or in the bottom surface of the magazine 30 can be fitted with the hole or protrusion (the hole 83b in this exemplary embodiment) formed in or on the upper surface of the extending-retracting portion 80.

The conveying mechanism conveys the magazine 30 between the first handover position 141 and the second handover position in a state (Fig. 31B) where the extending-retracting portion 80 is caused to be accommodated in the movable-body main body 70 and the magazine 30 is caused to be held at a position above the movable-body main body 70.

This makes it possible to convey the magazine 30 using the movable body 60 in a state where the planar size of a space that the movable body 60 and the magazine 30 occupy is reduced. Thus, it is possible to convey the magazine 30 without interference of the extending-retracting portion 80 and the magazine 30 with the storage shelf 21 and the second storage shelf 22.

As illustrated in Figs. 18 to 20, the movable body 60 includes a pair of movable-body-side magazine guiding portions 61 that are erected from the movable-body main body 70, the pair of movable-body-side magazine guiding portions 61 being disposed so as to be opposed to each other.

As illustrated in Fig. 19, in a state where the conveying mechanism causes the magazine 30 to be held at a position above the movable-body main body 70, the pair of movable-body-side magazine guiding portions 61 are each brought close to or brought into contact with each of both side surfaces of the magazine 30.

This makes it possible to more stably hold the magazine 30 at the time of conveying the magazine 30 using the movable body 60.

Furthermore, it is preferable that the height size of the movable-body-side magazine guiding portion 61 be larger than the left-right width size of the magazine 30, which makes it possible to more stably hold the magazine 30 with the movable body 60.

The pair of movable-body-side magazine guiding portions 61 each include, for example, an erected wall portion 61a that is erected from the movable-body main body 70, and an upper-end protruding portion 61b formed on the upper end portion of the erected wall portion 61a.

The upper-end protruding portion 61b of the movable-body-side magazine guiding portion 61 on the left side protrudes toward the right side. The upper-end protruding portion 61b of the movable-body-side magazine guiding portion 61 on the right side protrudes toward the left side.

Furthermore, in a state where the magazine 30 is held above the movable-body main body 70, the upper-end protruding portion 61b of each of the pair of movable-body-side magazine guiding portions 61 is brought close to or brought into contact with the left or right side surface of the magazine 30, as illustrated in Fig. 19.

This makes it possible to more stably support the magazine 30 with the movable body 60. In addition, in a case where the lower portion of the magazine 30 has a portion that protrudes horizontally (in the left and right direction), it is possible to suppress interference between this protruding portion and the erected wall portion 61a.

As described above, the upper end portions of the pair of movable-body-side magazine guiding portions 61 have the upper-end protruding portions 61b that protrude toward each other.

As illustrated in Fig. 20, the upper-end protruding portions 61b of the pair of movable-body-side magazine guiding portions 61 each have a central portion in the extending-retracting direction (in the front-rear direction) of the extending-retracting portion 80. The central portions more protrude toward each other than both end portions of the upper-end protruding portion 61b in this extending-retracting direction.

This makes it possible to suppress interference between the magazine 30 and the upper-end protruding portion 61b and to move the magazine 30 in a smooth manner, when the magazine 30 supported with the magazine supporting portion 23 or the installed-magazine mounting portion 24 is lifted, and then, the magazine 30 is moved in the horizontal direction (in the front-rear direction) to store the magazine 30 in a space between the pair of movable-body-side magazine guiding portions 61.

Next, with reference to Figs. 23 to 26, description will be made of an operation in which a magazine 30 is pick up using the movable body 60 from the magazine supporting portion 23 of the storage shelf 21 to cause the magazine 30 to be held on the movable-body main body 70.

First, as illustrated in Fig. 23, the conveying mechanism uses the movement mechanism 90 (that will be described later: Fig. 45) to move the movable body 60 to a position that is opposed to a magazine 30 to be picked up, that is, to the second handover position.

Next, as illustrated in Fig. 24, the conveying mechanism causes the extending-retracting portion 80 to protrude from the movable-body main body 70 to cause the extending-retracting portion 80 to be inserted into the inserting space 130 below the magazine 30.

Next, as illustrated in Fig. 25, the conveying mechanism causes the movable body 60 to ascend. This allows the magazine 30 to shift from a state where the magazine 30 is supported with the magazine receiving portion 26 of the magazine supporting portion 23 to a state where the magazine 30 is held with the extending-retracting portion 80.

Here, at the time of holding the magazine 30 with the extending-retracting portion 80, the movable body 60 is caused to slightly vibrate using the movement mechanism 90, which makes it possible to more smoothly fit the protrusion 35 of the magazine 30 into the hole 83b of the third extending-retracting portion main body 83.

Next, as illustrated in Fig. 26, the conveying mechanism causes the extending-retracting portion 80 to be accommodated in the movable-body main body 70. This allows the magazine 30 to be disposed in a space between the pair of movable-body-side magazine guiding portions 61 on the movable-body main body 70 of the movable body 60. That is, the magazine 30 is in a state of being held on the movable-body main body 70. The magazine 30 is also held with the extending-retracting portion 80 even in a state of Fig. 26.

Here, description has been made of the operation in which the magazine 30 is picked up from the magazine supporting portion 23 of the storage shelf 21 to cause it to be held on the movable-body main body 70. However, an operation of picking up the magazine 30 from the magazine supporting portion 23 of the second storage shelf 22 to cause it to be held on the movable-body main body 70 is similar to that described with reference to Figs. 23 to 26, except that the extending-retracting portion 80 protrudes from the movable-body main body 70 in a different direction. Thus, detailed explanation thereof will not be repeated.

In addition, the operation of picking up the magazine 30 from the installed-magazine mounting portion 24 to cause it to be held on the movable-body main body 70 is similar to that described with reference to Figs. 23 to 26. Thus, detailed explanation thereof will not be repeated.

After the magazine 30 is picked up from the magazine supporting portion 23 of the storage shelf 21 or the second storage shelf 22 to cause it to be held on the movable-body main body 70, the conveying mechanism causes the movable body 60 to move vertically or in the left and right direction to convey the magazine 30 to the first handover position. Then, the conveying mechanism transfers the magazine 30 from the movable body 60 to the installed-magazine mounting portion 24.

Furthermore, after the magazine 30 is picked up from the installed-magazine mounting portion 24 to cause it to be held on the movable-body main body 70, the conveying mechanism moves the movable body 60 vertically or in the left and right direction to convey the magazine 30 to the second handover position. Then, the conveying mechanism transfers the magazine 30 from the movable body 60 to the magazine supporting portion 23 of the storage shelf 21 or the second storage shelf 22.

Next, with reference to Figs. 27 to 30, description will be made of an operation in which a magazine 30 is transferred from the movable body 60 to the magazine supporting portion 23 of the storage shelf 21.

First, as illustrated in Fig. 27, the conveying mechanism uses the movement mechanism 90 (that will be described later: Fig. 45) to move the movable body 60 to a position that is opposed to a storage space serving as a target of transferring, that is, to the second handover position.

Next, as illustrated in Fig. 28, the conveying mechanism causes the extending-retracting portion 80 to protrude from the movable-body main body 70 to dispose the magazine 30 above the pair of magazine receiving portions 26 that constitute the storage space serving as a target of transferring.

Next, as illustrated in Fig. 29, the conveying mechanism causes the movable body 60 to descend. This causes a shift from a state where the magazine 30 is held with the extending-retracting portion 80 to a state where the magazine 30 is supported with the magazine receiving portion 26 of the magazine supporting portion 23. That is, the magazine 30 is transferred from the movable body 60 to the magazine supporting portion 23.

Next, as illustrated in Fig. 30, the conveying mechanism causes the extending-retracting portion 80 to be accommodated in the movable-body main body 70.

Here, description has been made of the operation in which the magazine 30 is transferred from the movable body 60 to the magazine supporting portion 23 of the storage shelf 21. However, an operation of transferring the magazine 30 from the movable body 60 to the magazine supporting portion 23 of the second storage shelf 22 is similar to that described with reference to Figs. 27 to 30, except that the extending-retracting portion 80 protrudes from the movable-body main body 70 in a different direction. Thus, detailed explanation thereof will not be repeated.

An operation of transferring the magazine 30 from the movable body 60 to the installed-magazine mounting portion 24 is similar to the operation described with reference to Figs. 23 to 26. Thus, detailed explanation thereof will not be repeated.

Next, with reference to Figs. 32 to 34, description will be made of an operation in which a product 50 is dispensed from a magazine 30 supported with the magazine supporting portion 23 of the storage shelf 21.

First, as illustrated in Fig. 32, the conveying mechanism uses the movement mechanism 90 (that will be described later: Fig. 45) to move the movable body 60 to a position that is opposed to a magazine 30 that stores a product 50 to be dispensed.

Next, as illustrated in Fig. 33, the conveying mechanism causes the extending-retracting portion 80 to protrude from the movable-body main body 70 to insert this extending-retracting portion 80 into the magazine 30 through the discharging port 33 at the lower end portion of the magazine 30. This allows a product 50 at the lowermost column in the magazine 30 to be pushed out from the magazine 30 with the extending-retracting portion 80 (also see Fig. 35). The product 50 that has been pushed out from the magazine 30 drops onto the chute 19 and is guided downward by this chute 19. Then, the product 50 is dispensed to the pick-up position 20 (Fig. 1). This makes it possible to pick up the dispensed product 50 to the outside of the dispensing device 100.

Next, as illustrated Fig. 34, the conveying mechanism causes the extending-retracting portion 80 to be accommodated in the movable-body main body 70.

Here, description has been made of the operation in which the product 50 is dispensed from the magazine 30 supported with the magazine supporting portion 23 of the storage shelf 21. However, an operation of dispensing a product 50 from a magazine 30 supported with the magazine supporting portion 23 of the second storage shelf 22 is similar to that described with reference to Figs. 32 to 34, except that the extending-retracting portion 80 protrudes from the movable-body main body 70 in a different direction. Thus, detailed explanation thereof will not be repeated.

As described above, in the case of this exemplary embodiment, the product 50 is dispensed from the magazine 30 in a manner such that the product 50 is pushed out horizontally from the magazine 30 using the extending-retracting portion 80 to dispense the product 50.

That is, the extending-retracting portion 80 is shared by the conveying mechanism and the dispensing mechanism. The dispensing mechanism causes the extending-retracting portion 80 to protrude from the movable-body main body 70 to push out the product 50 from the magazine 30, thereby dispensing the product 50.

In the case of this exemplary embodiment, at least one of the pair of movable-body-side magazine guiding portions 61 includes a product detecting sensor that detects a product 50 within a magazine 30 supported with the magazine supporting portion 23.

For example, as illustrated in Fig. 19, each of the pair of movable-body-side magazine guiding portions 61 includes a product detecting sensor 111 or 112.

Furthermore, each of the pair of movable-body-side magazine guiding portions 61 includes a product detecting sensor that faces the storage shelf 21 side, and a product detecting sensor that faces the second storage shelf 22 side.

That is, the movable-body-side magazine guiding portion 61 on the left side includes the product detecting sensor 111 that faces the storage shelf 21 side, and a product detecting sensor 113 (Fig. 48) that faces the second storage shelf 22 side.

In addition, the movable-body-side magazine guiding portion 61 on the right side includes the product detecting sensor 112 that faces the storage shelf 21 side, and a product detecting sensor 114 (Fig. 48) that faces the second storage shelf 22 side.

For example, it is possible to use an infrared light sensor for the product detecting sensors 111 to 114. The product 50 within the magazine 30 can be detected, for example, through a vertically elongated opening 31a (Fig. 6) formed in the box main body portion 31.

In a case where the magazine 30 is supported with the magazine supporting portion 23 in a manner such that the front-rear direction thereof is contrary to that illustrated in Fig. 6, it is possible to detect the product 50 within the magazine 30 through a vertically elongated opening 32a (Fig. 11) formed in the box lid portion 32.

Detected signals from the product detecting sensors 111 to 114 are caused to be inputted in a controlling unit 150 (Fig. 48) that will be described later. The controlling unit 150 has a function of judging a quantity of products 50 in the magazine 30 or judging an improper loading of the product 50 in the magazine 30, on the basis of detection results by the product detecting sensors 111 to 114.

That is, the dispensing device 100 includes a quantity judging unit that judges a quantity of products 50 in the magazine 30 on the basis of detection results by the product detecting sensors 111 to 114. Thus, it is possible to easily manage an inventory of the products 50 in the dispensing device 100.

In addition, the dispensing device 100 includes an improper-loading judging unit that judges an improper loading of a product 50 in the magazine 30 on the basis of detection results by the product detecting sensors 111 to 114. Thus, in a case where a magazine 30 having an improper loading exists, it is possible to temporarily move this magazine 30 to the installed-magazine mounting portion 24 to allow an operator to re-load products 50.

The quantity of products 50 in the magazine 30 can be judged, for example, through calculation in which the height position of the upper surface of a product 50 located at the uppermost column of the products 50 stored in the magazine 30 is divided by the known thickness of a product 50.

An improper loading of a product 50 in the magazine 30 can be detected, for example, in a manner such that, in a case where a product 50 has been once detected and then is not detected temporarily when the product detecting sensor scans from up to down, it is possible to detect that an improper loading occurs.

Here, the distance between the left and right product detecting sensors (the distance between the product detecting sensor 111 and the product detecting sensor 112, and the distance between the product detecting sensor 113 and the product detecting sensor 114) is set so as to be equivalent to a distance (center-to-center distance) of arrangement between adjacent magazines 30.

This makes it possible to use one product detecting sensor of the left and right product detecting sensors to detect a product 50 in a magazine 30 from among magazines 30 disposed on the left and right while using the other product detecting sensor to detect a product 50 in the other magazine 30. Thus, it is possible to rapidly manage the inventory or detect an improper loading.

In addition, it is possible to use the product detecting sensor 111 and the product detecting sensor 112 to concurrently detect products 50 in two magazines 30 in the storage shelf 21 while using the product detecting sensor 113 and the product detecting sensor 114 to concurrently detect products 50 in two magazines 30 in the second storage shelf 22. Thus, it is possible to more rapidly manage the inventory or detect an improper loading.

Next, the movable-body main body 70 and the extending-retracting portion 80 will be described with reference to Figs. 36 to 44.

As illustrated in Fig. 36, the movable-body main body 70 includes, for example, a lower portion housing 71, fixing members 72, and press members 73. The fixing members 72 and the press members 73 are provided on the upper surface side of the lower portion housing 71.

The lower portion housing 71 is configured, for example, by assembling together a lower-side member 71a that constitutes a housing and an upper-side member 71b that constitutes the housing. The lower portion housing 71 is formed into a rectangular shape in plan view

The lower portion of the lower portion housing 71 includes a fixing hook 71c used to fix the lower portion housing 71 on a mounting plate 98 (Fig. 45), which will be described later, of the movement mechanism 90.

The lower portion housing 71 stores, therein, a driving mechanism that includes, for example, an extending-retracting driving motor 161 (Fig. 48) serving as a drive source for the extending-retracting portion 80. There is no limitation as to details of this driving mechanism. However, the driving mechanism includes, for example, a shaft that is rotated and driven by the extending-retracting driving motor 161. The shaft has an axial direction extending in the front-rear direction. The outer peripheral surface of the shaft includes a helical groove.

In association with rotation of the extending-retracting driving motor 161, the extending-retracting portion 80 protrudes along the axial direction of the shaft toward the front from the movable-body main body 70, or protrudes toward the rear from the movable-body main body 70.

The extending-retracting portion 80 is configured, for example, into multiple stages. In the case of this exemplary embodiment, the extending-retracting portion 80 has a three-stage configuration including the extending-retracting portion main body 81, the second extending-retracting portion main body 82, and the third extending-retracting portion main body 83.

As illustrated in Fig. 44, the main body member 811 that constitutes the extending-retracting portion main body 81 protrudes from the movable-body main body 70. In addition, the second extending-retracting portion main body 82 protrudes further than the main body member 811. Furthermore, the third extending-retracting portion main body 83 protrudes further than the second extending-retracting portion main body 82.

As illustrated in Fig. 41, the main body member 811 is a flattened plate-shaped member. For example, the main body member 811 is formed into a rectangular shape elongated in the front-rear direction in plan view. The front-rear size of the main body member 811 is equal to the front-rear size of the lower portion housing 71.

Pinion holding bosses 811a are each formed on the upper surface of the main body member 811 so as to protrude upward at the left end portion and the right end portion of the central portion of the main body member 811 in the front-rear direction.

The extending-retracting portion main body 81 is configured to include, for example, the main body member 811 and a connecting member that connects the main body member 811 and the shaft described above. The connecting member engages with the helical groove in the outer peripheral surface of the shaft. As the shaft rotates, the extending-retracting portion main body 81 moves toward the front or toward the rear.

As illustrated in Fig. 39, the main body member 811 is disposed along the upper surface of the lower portion housing 71. The main body member 811 is disposed, for example, at the central portion of the lower portion housing 71 in the left-right width direction. The main body member 811 is configured to be able to move back and forth along the upper surface of the lower portion housing 71.

Each of the pinion holding bosses 811a of the main body member 811 is inserted into a pinion 76. This allows the pinion holding boss 811a to hold the pinion 76 in a rotatable manner. That is, the pinion holding boss 811a serves as a rotating shaft for the pinion 76. The direction of the rotating shaft for the pinion 76 matches the vertical direction.

As illustrated in Fig. 39, upward movement of both left and right edge portions of the main body member 811 is restricted by a pair of left and right press members 73 fixed on the upper surface of the lower portion housing 71. This makes it possible to restrict falling upward of the main body member 811 out of the lower portion housing 71.

Each of the press members 73 is a plate-shaped member elongated in the front-rear direction. For example, the front-rear size of the press member 73 is equal to the front-rear size of the lower portion housing 71.

The pair of press members 73 are disposed so as to be in parallel to each other.

A rack portion 73a having a rack-and-pinion structure is formed on each of edge portions of the pair of press members 73, the edge portions facing each other.

The rack portion 73a of the press member 73 on the left side engages with the pinion 76 on the left side. The rack portion 73a of the press member 73 on the right side engages with the pinion 76 on the right side.

As illustrated in Fig. 42, the second extending-retracting portion main body 82 is a flattened plate-shaped member. For example, the second extending-retracting portion main body 82 is formed into a rectangular shape elongated in the front-rear direction in plan view. The front-rear size of the second extending-retracting portion main body 82 is equal to the front-rear size of the lower portion housing 71.

Pinion holding bosses 82b are each formed on the upper surface of the second extending-retracting portion main body 82 so as to protrude upward at the left end portion and the right end portion of the central portion of the second extending-retracting portion main body 82 in the front-rear direction.

As illustrated in Figs. 38 and 40, the second extending-retracting portion main body 82 is disposed along the upper surface of the main body member 811, and can move back and forth along the upper surface of the main body member 811. The left-right width size of the second extending-retracting portion main body 82 is smaller than the left-right width size of the main body member 811. The second extending-retracting portion main body 82 is disposed at the central portion of the main body member 811 in the left-right width direction.

Rack portions 82a each having a rack-and-pinion structure are each formed on each of both left and right edge sides of the second extending-retracting portion main body 82.

The rack portion 82a on the left side engages with the pinion 76 on the left side. The rack portion 82a on the right side engages with the pinion 76 on the right side.

As illustrated in Fig. 37, a pair of left and right fixing members 72 are fixed on the upper surface of the lower portion housing 71. The press members 73 are disposed between the fixing members 72 and the lower portion housing 71. Each of the fixing members 72 is a flattened plate-shaped member. Each of the fixing members 72 is formed into a rectangular shape elongated in the front-rear direction in plan view. The front-rear size of each of the fixing members 72 is equal to the front-rear size of the lower portion housing 71.

The movable-body-side magazine guiding portion 61 on the left side is fixed on the fixing member 72 on the left side. The movable-body-side magazine guiding portion 61 on the right side is fixed on the fixing member 72 on the right side.

Furthermore, rack members 75 are each fixed on each of both left and right end portions of the upper surface of the main body member 811. Each of the rack members 75 is formed into a shape elongated in the front-rear direction. The front-rear size of each of the rack members 75 is equal to the front-rear size of the main body member 811.

Rack portions 75a each having a rack-and-pinion structure are each formed on each of the right-side edge portion of the rack member 75 on the left side and the left-side edge portion of the rack member 75 on the right side.

Each of the rack members 75 lies over the left and right edge portions of the second extending-retracting portion main body 82. Falling upward of the second extending-retracting portion main body 82 from the main body member 811 is restricted by the rack member 75.

Each of the pinion holding bosses 82b of the second extending-retracting portion main body 82 is inserted into each of the pinions 77. This allows the pinion holding boss 82b to hold the pinion 77 in a rotatable manner. That is, the pinion holding boss 82b serves as a rotating shaft for the pinion 77. The direction of the rotating shaft for the pinion 77 matches the vertical direction.

The pinion 77 on the left side engages with the rack portion 75a of the rack member 75 on the left side. The pinion 77 on the right side engages with the rack portion 75a of the rack member 75 on the right side.

Guide members 74 are each provided integrally with each of the left and right rack members 75. Each of the guide members 74 is formed into a shape elongated in the front-rear direction. The front-rear size of each of the guide members 74 is equal to the front-rear size of the rack member 75.

As illustrated in Fig. 43, the third extending-retracting portion main body 83 is a flattened plate-shaped member. For example, the third extending-retracting portion main body 83 is formed into a rectangular shape elongated in the front-rear direction in plan view. The front-rear size of the third extending-retracting portion main body 83 is equal to the front-rear size of the lower portion housing 71.

The third extending-retracting portion main body 83 includes a downward protruding portion 831 that protrudes on the lower surface side. The downward protruding portion 831 extends, for example, over the front end to the rear end of the third extending-retracting portion main body 83.

Rack portions 83a each having a rack-and-pinion structure are each formed on each of left and right edge portions of the downward protruding portion 831.

As illustrated in Fig. 36, the third extending-retracting portion main body 83 is disposed along the upper surface of the second extending-retracting portion main body 82, and can move back and forth along the upper surface of the second extending-retracting portion main body 82.

The rack portion 83a on the left side of the third extending-retracting portion main body 83 engages with the pinion 77 (Fig. 37) on the left side. The rack portion 83a on the right side of the third extending-retracting portion main body 83 engages with the pinion 77 (Fig. 37) on the right side.

The edge portion on the left side of the third extending-retracting portion main body 83 is sandwiched from above and below between the guide member 74 on the left side and the rack member 75 on the left side. The edge portion on the right side of the third extending-retracting portion main body 83 is sandwiched from above and below between the guide member 74 on the right side and the rack member 75 on the right side.

This makes it possible for the guide member 74 to restrict falling upward of the third extending-retracting portion main body 83.

Here, as the main body member 811 protrudes toward the front with respect to the lower portion housing 71 due to driving of the extending-retracting driving motor 161, the pair of left and right pinions 76 moves forward in association with the main body member 811. At this time, the pair of left and right pinions 76 move forward while rotating in a state of engaging with the individual rack portion 73a. In addition, the second extending-retracting portion main body 82 includes the pair of left and right rack portions 82a that engage with the pair of left and right pinions 76. This causes the second extending-retracting portion main body 82 to protrude toward the front from the extending-retracting portion main body 81 by the amount equal to the amount of protrusion of the main body member 811 from the lower portion housing 71 (see Fig. 44) .

Furthermore, at the time when the second extending-retracting portion main body 82 protrudes toward the front from the extending-retracting portion main body 81, the pair of left and right pinions 77 move forward in association with the second extending-retracting portion main body 82. At this time, the pair of left and right pinions 77 move forward while rotating in a state of engaging with the individual rack portions 75a. In addition, the third extending-retracting portion main body 83 includes the pair of left and right rack portions 83a that engage with the pair of left and right pinions 77. Thus, the third extending-retracting portion main body 83 protrudes toward the front from the second extending-retracting portion main body 82 by the amount equal to the amount of protrusion of the second extending-retracting portion main body 82 from the main body member 811 (see Fig. 44) .

Thus, the amount of protrusion of the third extending-retracting portion main body 83 from the lower portion housing 71 is three times the amount of protrusion of the main body member 811 from the lower portion housing 71.

This similarly applies to a case where the main body member 811 protrudes toward the rear with respect to the lower portion housing 71 due to driving of the extending-retracting driving motor 161. That is, the second extending-retracting portion main body 82 protrudes toward the rear from the extending-retracting portion main body 81 by the amount equal to the amount of protrusion of the main body member 811 from the lower portion housing 71. The third extending-retracting portion main body 83 protrudes toward the rear from the second extending-retracting portion main body 82 by the amount equal to the amount of protrusion of the second extending-retracting portion main body 82 from the main body member 811.

Next, the movement mechanism 90 of the conveying mechanism will be described with reference to Fig. 45.

The movement mechanism 90 includes the mounting plate 98 on which the movable body 60 is mounted, a rail 97 that holds the mounting plate 98 so as to be able to move in the left and right direction, and a pair of left and right supporting plates 96 provided respectively at a left end portion and a right end portion of the rail 97. The rail 97 is disposed horizontally, and extends in the left and right direction.

Furthermore, the movement mechanism 90 includes, for example, a pair of left and right frames 91, 92. The frame 91 on the left side is disposed, for example, along the inner surface of the left side wall 13. The frame 92 on the right side is disposed, for example, along the inner surface of the right side wall 14.

The frame 91 is provided with a pair of upper and lower pulleys 93 (the lower-side pulley 93 is not shown) . A Y driving timing belt 94 runs over these pulleys 93. The supporting plate 96 on the left side is fixed at one location of the Y driving timing belt 94 in the circumferential direction.

Similarly, the frame 92 is also provided with a pair of upper and lower pulleys (not shown) . A Y driving timing belt (not shown) also runs over these pulleys . The supporting plate 96 on the right side is fixed at one location of the Y driving timing belt in the circumferential direction.

Furthermore, the movement mechanism 90 includes a drive transmitting shaft 95 that connects the pulleys on the upper side to each other (the pulley 93 on the upper side from among the pair of upper and lower pulleys 93 of the frame 91 on the left side, and the pulley on the upper side from among the pair of upper and lower pulleys of the frame 92 on the right side) .

In addition, the movement mechanism 90 also includes a Y driving motor 163 that rotates and drives the pulley 93 on the upper side. One or more gears may be disposed between the Y driving motor 163 and the pulley 93.

As the Y driving motor 163 rotates and drives the pulley 93 on the left side, the Y driving timing belt 94 on the left side rotates. Furthermore, the pulley on the right side rotates in synchronization with the pulley 93 on the left side through the drive transmitting shaft 95, and hence, the Y driving timing belt on the right side also rotates.

This causes the left and right supporting plates 96 to ascend or descend. Thus, the rail 97, the mounting plate 98, and the movable body 60 also ascend or descend integrally with these supporting plates 96.

Furthermore, for example, within the rail 97, the movement mechanism 90 includes the pair of left and right pulleys, an X driving motor 162 (Fig. 48) that rotates and drives one of these pulleys, and an X driving timing belt that runs over these pulleys, although illustration is not given.

A mounting plate 98 is fixed at one location of the X driving timing belt in the circumferential direction.

As the X driving motor 162 rotates and drives the pulley, the X driving timing belt rotates.

This enables the mounting plate 98 and the movable body 60 to move toward the left or right along the rail 97.

The structure of the movement mechanism 90 described here is merely an example. The movement mechanism 90 may use other mechanisms that can move the movable body 60 vertically and horizontally.

As illustrated in Figs. 3 and 46 or the like, the dispensing device 100 includes a posture controlling member 120 disposed below and on a side toward which a product 50 is pushed out, with respect to the magazine 30 supported with the storage shelf 21 or the second storage shelf 22.

The posture controlling member 120 includes a sloped surface 122 that is sloped downward toward the direction in which a product 50 is pushed out. With this sloped surface 122, the posture of the product 50 that has been pushed out from the magazine 30 is controlled. That is, the posture of the product 50 is controlled using the sloped surface 122 so that the top-bottom direction of the product 50 forms a steep angle equal to or more than a certain angle.

This allows the product 50 to more smoothly drop onto the chute 19.

As illustrated in Fig. 6, the posture controlling member 120 includes a curved plate-shaped portion 121 having one surface provided with a sloped surface 122, and plural intersecting plate portions 123 provided on the other surface of the curved plate-shaped portion 121 and intersecting the curved plate-shaped portion 121. The curved plate-shaped portion 121 is formed into a shape elongated in the left and right direction.

As illustrated in Figs. 9 and 47, a rotating shaft portion 124 that extends in the left and right direction is formed at the upper end portion of the curved plate-shaped portion 121.

Furthermore, bearing portions 26a that hold a part of the rotating shaft portion 124 are each formed at an end portion of each of the magazine receiving portions 26, this end portion being on a side opposite to the movement region 181 side. The rotating shaft portion 124 of one posture controlling member 120 is held with the bearing portions 26a of the plural magazine receiving portions 26 arranged in one line in the left and right direction.

As described above, the posture controlling member 120 is pivotally supported with the plural magazine receiving portions 26 in a rotatable manner.

A side plate 125 (Fig. 46) that intersects the axial direction of the rotating shaft portion 124 at a right angle is provided at both ends of the rotating shaft portion 124.

Furthermore, each of the intersecting plate portions 123 of the posture controlling member 120 is in contact with a surface of the upper portion of the magazine 30, the surface being opposite to the movement region 181 side.

As illustrated in Figs. 3, 6, and 46, the curved plate-shaped portion 121 covers a surface of the upper portion of the magazine 30, the surface being on a side opposite to the movement region 181 side. This suppresses falling-over of the magazine 30 toward the side opposite to the movement region 181 side.

Furthermore, it is also possible to cause the posture controlling member 120 to rotate about the axis of the rotating shaft portion 124 to lift the posture controlling member 120 upward, thereby creating a state where the curved plate-shaped portion 121 does not cover the surface of the upper portion of the magazine 30, the surface being on a side opposite to the movement region 181 side. This makes it possible to easily remove the magazine 30 from the storage shelf 21 when the front surface wall 11 is opened.

Thus, in an emergency such as at the time of a power outage, it is possible to manually pick up a product 50 from each magazine 30 and sell it.

Furthermore, when a magazine 30 is conveyed to the storage shelf 21 or the second storage shelf 22, it is possible to use each of the intersecting plate portions 123 to position a surface of the magazine 30 in place, the surface being on the side opposite to the movement region 181 side.

As described above, the dispensing device 100 includes the chute 19 that is disposed below the storage shelf 21 and the second storage shelf 22 and guides downward a product 50 toward the pick-up position 20, this product 50 having been pushed out from a magazine 30, and also includes the posture controlling member 120 that is disposed at a position below and on the side toward which the product 50 is pushed out, the position being with respect to the magazine 30. The posture controlling member 120 includes the sloped surface 122 that is sloped downward toward the direction in which the product 50 is pushed out. With this sloped surface 122, the posture of the product 50 that has been pushed out from the magazine 30 is controlled.

Next, a block configuration of the dispensing device 100 will be described with reference to Fig. 48.

The dispensing device 100 includes a controlling unit 150 that collectively controls operations of each portion of the dispensing device 100. The controlling unit 150 controls operations of the extending-retracting driving motor 161, the X driving motor 162, the Y driving motor 163, and the like.

The controlling unit 150 is configured to include a ROM 152 that stores a program for controlling, a CPU 151 that performs controlling operation in accordance with the program for controlling, and a RAM 153 that functions, for example, as a working area for the CPU 151.

Here, for example, a bar code reader 191 is provided at a position of the front surface wall 11 that is close to the open-close door 17. Arrangement of magazines 30 in the storage shelf 21 and the second storage shelf 22 is set in advance, for example, on a brand by brand basis.

When a magazine 30 is installed in the dispensing device 100, an operator holds a product 50 over the bar code reader 191 to cause it to read a bar code attached on the external surface of the product 50. This allows the controlling unit 150 to recognize a brand of the product 50 that has already been stored in the magazine 30 to be installed, and also recognize a storage space where this magazine 30 is to be stored.

In addition, the dispensing device 100 further includes a door switch (open-close detecting portion: not shown in the drawing) that detects whether or not the open-close door 17 is closed. That is, in a case where the open-close door 17 is closed, the door switch detects that the open-close door 17 is closed, or in a case where the open-close door 17 is opened, the door switch detects that the open-close door 17 is opened.

Detection results by the door switch are inputted into the controlling unit 150 as necessary. The controlling unit 150 continuously monitors whether or not the open-close door 17 is closed.

If the open-close door 17 is closed after a magazine 30 is installed at the installed-magazine mounting portion 24, the controlling unit 150 performs control of conveying the magazine 30 to a storage space corresponding to a brand.

That is, the dispensing device 100 includes a magazine-conveying controlling unit (controlling unit 150) . In a case where a magazine 30 is mounted at the installed-magazine mounting portion 24, the magazine-conveying controlling unit performs control of conveying this magazine 30 to an available region of the magazine supporting portion 23 of the storage shelf 21 or the second storage shelf 22 using the conveying mechanism.

In addition, the dispensing device 100 further includes a dispense-instruction acquiring unit 155.

The dispense-instruction acquiring unit 155 is, for example, an operation unit provided on the external surface of the housing 10, an operating tablet provided at a position spaced apart from the housing 10, or the like.

A sales clerk or a purchaser of a product 50 performs a predetermined operation to the dispense-instruction acquiring unit 155. This makes it possible for the purchaser to designate a brand of the product 50 to be purchased.

With the operation being made to the dispense-instruction acquiring unit 155, it may be possible to search various brands of product 50 using various types of searching methods such as 50-phonetic search, brand-name search, tar-value search, and nicotine-value search, to designate a brand of product 50. Alternatively, it may be possible to identify a purchaser using purchaser's personal authentication information (voice print authentication, vein recognition, or information used for authentication such as reading of a recording medium) to search for the brand purchased in the last time.

Here, designating a brand of product 50 purchased by a purchaser through operation to the dispense-instruction acquiring unit 155 is referred to as "the dispense-instruction acquiring unit 155 acquires a dispense instruction." The dispense instruction acquired by the dispense-instruction acquiring unit 155 is notified from the dispense-instruction acquiring unit 155 to the controlling unit 150.

The controlling unit 150 is configured to cause the conveying mechanism to perform a process of dispensing a product 50 from a magazine 30 that stores the product 50 with a brand corresponding to the dispense instruction.

While a magazine 30 may be mounted at the installed-magazine mounting portion 24 at all times, the magazine supporting portion 23 may have an available region at which one or more magazines 30 can be mounted. That is, the controlling unit 150 may not necessarily have to immediately transfer a magazine 30 into which a product 50 has been reloaded, to the magazine supporting portion 23.

In addition, a product 50 may be dispensed from a magazine 30 mounted at the installed-magazine mounting portion 24 in response to a dispense instruction. That is, the dispensing mechanism may be configured to dispense a product 50 from a magazine 30 at the magazine supporting portion 23 or a magazine 30 at the installed-magazine mounting portion 24.

In a case where the dispensing device 100 includes plural installed-magazine mounting portions 24, the controlling unit 150 may transfer a magazine 30 having more products 50 stored therein from among plural magazines 30 mounted at these installed-magazine mounting portions 24, to an available region in the magazine supporting portion 23. In addition, the controlling unit 150 may transfer a magazine 30 having fewer products 50 stored therein, that is, a magazine 30 that needs reloading or will need reloading in the near future, from among magazines 30 at the magazine supporting portion 23, to the installed-magazine mounting portion 24 having available regions created as a result of the operation described above. Furthermore, it is preferable to configure the controlling unit 150 such that a magazine 30 that stores products 50 with a top-selling brand is preferentially disposed at the installed-magazine mounting portion 24.

### <First Modification Example>

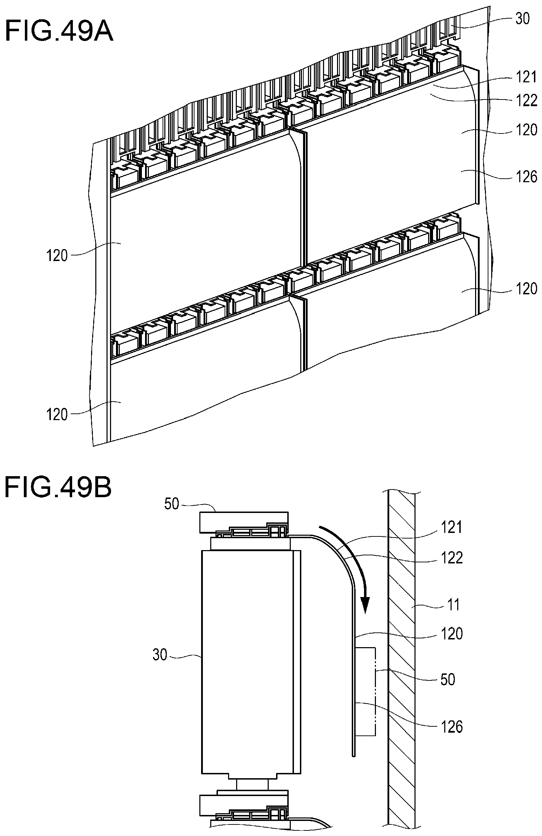

Next, a dispensing device 100 according to a first modification example will be described with reference to Figs. 49A and 49B.

In the case of the present modification example, the posture controlling member 120 includes a vertical plate-shaped portion 126 that is connected continuously to the lower side of the lower end of the curved plate-shaped portion 121, in addition to the curved plate-shaped portion 121 having the sloped surface 122 on the one surface thereof. The plate surface of the vertical plate-shaped portion 126 is disposed vertically.

With the posture controlling member 120 including the vertical plate-shaped portion 126, it is possible to cause a product 50 dispensed from a magazine 30 and having a posture controlled by the sloped surface 122 to drop straightly along the vertical plate-shaped portion 126 as illustrated in Fig. 49B. This makes it possible to suppress clogging of the product 50 during drop between the front surface wall 11 and the magazine 30 or between the back surface wall 15 and the magazine 30.

### <Second Modification Example>

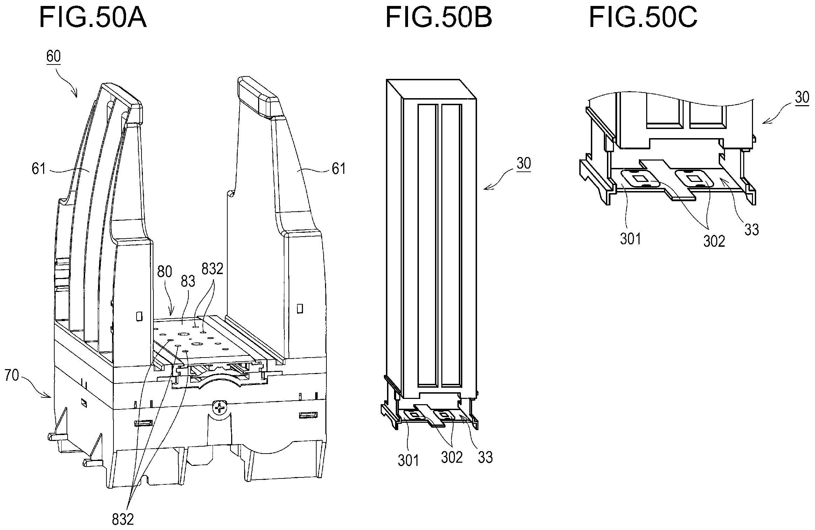

Next, a dispensing device 100 according to a second modification example will be described with reference to Figs. 50A, 50B, and 50C.

In the case of the present modification example, for example, plural magnets 832 are embedded in an upper surface of the third extending-retracting portion main body 83 of the extending-retracting portion 80 of the movable body 60 so as to be flush with the upper surface of this third extending-retracting portion main body 83, as illustrated in Fig. 50A. As one example, two lines of magnets 832 are arranged in front and behind.

In addition, an attachment member 302 that is made of a magnetic material that can be attached to the magnet 832 of the extending-retracting portion 80 is provided in a bottom plate 301 that forms a lower end of the discharging port 33 of the magazine 30, as illustrated in Fig. 50B. The attachment member 302 includes, for example, a stainless plate. For example, a pair of left and right attachment members 302 are provided in the bottom plate 301. These attachment members 302 are disposed so as to correspond to each of the lines of the magnets 832.

Thus, in a state where the magazine 30 is held with the extending-retracting portion 80, the bottom surface of the magazine 30 and the extending-retracting portion 80 are attached to each other with magnetic force. This makes it possible to more stably hold the magazine 30 with the extending-retracting portion 80.

Here, description has been made of an example in which the magnets 832 are provided in the extending-retracting portion 80, and the attachment members 302 that is made of a magnetic material that can be attached to the magnets 832 are provided in the magazine 30. However, on the contrary to this, it may be possible to employ a configuration in which a magnet is provided in the magazine 30, and an attachment member that is made of a magnetic material and can be attached to the magnet is provided in the extending-retracting portion 80.

In addition, it may be possible to employ a configuration in which, in a state where the magazine 30 is held with the extending-retracting portion 80, the bottom surface of the magazine 30 and the extending-retracting portion 80 are attached to each other with magnetic force, and as in the exemplary embodiment described above, a protrusion or a hole formed on or in the bottom surface of the magazine 30 and a hole or a protrusion formed in or on the upper surface of the extending-retracting portion 80 can be fitted with each other.

### <Third Modification Example>

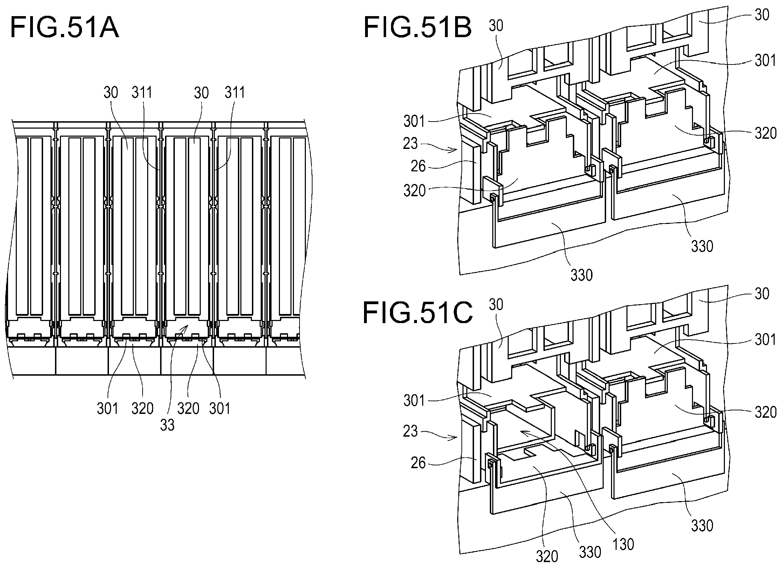

Next, a dispensing device 100 according to a third modification example will be described with reference to Figs. 51A to 52C.

In the case of the present modification example, the magazine 30 includes the discharging port 33 that allows a product 50 to be discharged from the magazine 30, as illustrated in Fig. 51A.

The dispensing device 100 includes a shutter member 320 that is provided swingably with respect to the installed-magazine mounting portion 24 or the magazine supporting portion 23. When the extending-retracting portion 80 protrudes from the movable-body main body 70, the shutter member 320 is pushed by this extending-retracting portion 80 to tilt. The dispensing device 100 also includes a stabilizing member 330. When the shutter member 320 is not being pushed by the extending-retracting portion 80, the stabilizing member 330 keeps the shutter member 320 in an erected state where at least part of the discharging port 33 is closed.

For example, the shutter member 320 is pivotally supported with a pair of magazine receiving portions 26 that constitute the installed-magazine mounting portion 24 or the magazine supporting portion 23, and can swing. The swing axis of the swing shutter member 320 extends in the horizontal direction as well as a direction in which plural magazines 30 are arranged at the installed-magazine mounting portion 24 or the magazine supporting portion 23. The shutter member 320 is disposed on the movement region 181 side with respect to the inserting space 130 and the discharging port 33.

The shutter member 320 can tilt only toward one direction (counterclockwise in Fig. 52A) from the erected state.

When the shutter member 320 is in the erecting state, the shutter member 320 closes at least part of the opening of the inserting space 130 on the movement region 181 side, and also closes at least part of the opening of the discharging port 33 on the movement region 181 side, as illustrated in Figs . 51A, 51B, and 52A. This makes it possible for the shutter member 320 to restrict dropping of a product 50 in the magazine 30 from the discharging port 33 toward the movement region 181 side.

As the shutter member 320 is pushed by the extending-retracting portion 80 and tilts, the stabilizing member 330 ascends as compared with the stabilizing member 330 before the shutter member 320 tilts, as with the stabilizing member 330 on the left side in Fig. 51C, the stabilizing members 330 illustrated in Fig. 52B, and the stabilizing member 330 illustrated in Fig. 52C.

In a state where the extending-retracting portion 80 enters the inserting space 130 as illustrated in Fig. 52C and the shutter member 320 is pushed by the extending-retracting portion 80 and tilts, the angle of tilt of the shutter member 320 increases and the amount of ascent of the stabilizing member 330 increases, as compared with a state where the shutter member 320 is pushed by the extending-retracting portion 80 and tilts at the time of dispensing a product 50 as illustrated in Fig. 52B.

For example, the stabilizing member 330 is swingably and pivotally supported with respect to the shutter member 320. The stabilizing member 330 is always in a state of hanging downward in the vertical direction from the shutter member 320 with its own weight. That is, in the case of the present modification example, the stabilizing member 330 is a weight member.

The force that causes the shutter member 320 to be erected acts on the shutter member 320 due to leverage using the weight of the stabilizing member 330.

If the extending-retracting portion 80 is caused to be accommodated in the movable-body main body 70 to remove the force that pushes the shutter member 320 by the extending-retracting portion 80, the shutter member 320 returns to the erected state (Fig. 52A) again due to leverage using the weight of the stabilizing member 330.

The present invention is not limited to an example in which the stabilizing member 330 is a weight member. The stabilizing member 330 may be a spring. That is, the force that causes the shutter member 320 to be erected may be achieved using elastic force of the stabilizing member 330.

As described above, the stabilizing member 330 may be, for example, an energizing member (a weight member, a spring, or the like) that gives an energizing force to the shutter member 320 that causes the shutter member 320 to be erected.

### <Fourth Modification Example>

Next, a dispensing device 100 according to a fourth modification example will be described with reference to Fig. 51A, and Figs. 53A to 53D.

In the case of the present modification example, the dispensing device 100 includes a partition wall portion 311 that is erected between side surfaces of adjacent magazines 30 from among magazines 30 disposed at the magazine supporting portion 23 or the installed-magazine mounting portion 24, as illustrated in Fig. 51A.

A rib 312 that extends in the front-rear direction is formed on a side surface of the partition wall portion 311, as illustrated in Fig. 53A. A groove portion 313 that is an empty portion is formed at a middle portion of the rib 312 in the extending direction.

As illustrated in Fig. 53B, the magazine 30 has a side surface including a protrusion 315 that protrudes toward the side direction from this side surface.

The protrusion 315 and the groove portion 313 are arranged so that the protrusion 315 is disposed at the groove portion 313 of the rib 312 in a state where the magazine 30 is disposed at the magazine supporting portion 23 or the installed-magazine mounting portion 24 (Fig. 53D).

Thus, in a state where a magazine 30 is disposed at the magazine supporting portion 23 or the installed-magazine mounting portion 24, (the protrusion 315 of) the side surface of the magazine 30 and (the rib 312 of) the partition wall portion 311 engage with each other, thereby restricting falling-over of the magazine 30 (in the front-rear direction) .

Here, description has been made of an example in which the rib 312 and the groove portion 313 are formed on and in the partition wall portion 311, and the side surface of the magazine 30 includes the protrusion 315. However, on the contrary to this, it may be possible to employ a configuration in which a rib and a groove portion are formed on and in the side surface of the magazine 30, and a protrusion is formed on the partition wall portion 311.

These are description of the exemplary embodiment with reference to the drawings. However, the exemplary embodiment is merely an example of the present invention. It may be possible to employ various configurations other than those described above.

For example, description has been made, for example, by giving an example in which the conveying mechanism is configured with the movement mechanism 90 and the movable body 60. However, the conveying mechanism may further include a conveying unit other than the movement mechanism 90 and the movable body 60.

In addition, description has been made by giving an example in which the conveying mechanism also functions as a dispensing mechanism. However, the dispensing device 100 may include a dispensing mechanism separately from the conveying mechanism.

In the description above, description has been made of an example in which the open-close door 17 is connected to the front surface wall 11 through a hinge. However, the open-close door 17 may be a sliding door provided so as to be able to slide in the left and the right direction.

In addition, it is preferable that the dispensing device 100 include an open-close-door lock mechanism that switches between a locked state where the open-close door 17 is kept in a closed state and a non-locked state where the open-close door 17 can be opened and closed, and the controlling unit 150 be configured to unlock the open-close-door lock mechanism when it is necessary to reload a product 50 into the magazine 30.

Furthermore, in the description above, description has been made of an example in which a magazine 30 is picked up from an installed-magazine mounting portion 24 to reload a product 50 in the magazine 30. However, it may be possible to employ a configuration in which, in a state where a magazine 30 is disposed at an installed-magazine mounting portion 24, an operator can open the box lid portion 32 of the magazine 30 to reload a product 50 into the magazine 30 through the installation port 17a.

In this case, it is also preferable that the controlling unit 150 move the rail 97 to the rear of each magazine 30 at the installed-magazine mounting portion 24 before the open-close-door lock mechanism is turned into the non-locked state. That is, in a state where the rail 97 exists at the rear of each magazine 30 at the installed-magazine mounting portion 24, the open-close-door lock mechanism is turned into the non-locked state. With this configuration, even if an operator accidentally pushes a magazine 30 toward the rear when reloading a product 50 into the magazine 30, it is possible to suppress falling-over of the magazine 30 toward the rear due to existence of the rail 97.

Furthermore, it is preferable that the dispensing device 100 include a door-closing notification portion configured to give notification prompting an operator to close the open-close door 17. The door-closing notification portion includes, for example, a light emitting member such as an LED provided on the open-close door 17. In this case, for example, it is possible to gives a prompt to close the open-close door 17 by causing the door-closing notification portion to flash on and off.

In a case where a dispensing instruction is given during reloading into the magazine 30, the controlling unit 150 first prompts closing the open-close door 17 using the door-closing notification portion. After this, once the controlling unit 150 detects that the open-close door 17 is closed, the open-close-door lock mechanism is switched into the locked state, and then, a product 50 is dispensed from the magazine 30.

As described above, the dispensing device 100 includes: the dispense-instruction acquiring unit 155; the open-close door 17 that can switch between the opened state where the magazine 30 can be inserted into and taken out from the installed-magazine mounting portion 24 and the closed state where the magazine 30 cannot be inserted into and taken out from the installed-magazine mounting portion 24; the open-close detecting portion that detects whether or not the open-close door 17 is closed; the open-close-door lock mechanism that can switch between the locked state where the open-close door 17 is kept in the closed state and the non-locked state where the open-close door 17 can be opened and closed; and a dispensing controlling unit (controlling unit 150). If the open-close detecting portion detects that the open-close door 17 is closed in a case where the dispense-instruction acquiring unit 155 acquires a dispense instruction when the open-close detecting portion detects that the open-close door 17 is opened, the dispensing controlling unit performs control of switching the open-close-door lock mechanism into the locked state, and also performs control of causing the dispensing mechanism to dispense the product 50 from the magazine 30, these controls being performed in this order.

Thus, it is possible to give a higher priority to an operation of dispensing a product 50, that is, selling a product 50 than an operation of reloading to a magazine 30.

In addition, it is preferable that, after the control of causing the dispensing mechanism to dispense the product 50 from the magazine 30, the controlling unit 150 perform control of switching the open-close-door lock mechanism into the non-locked state. This makes it possible for an operator to open the open-close door 17 again to resume the reloading operation of the product 50 into the magazine 30.

Furthermore, a guiding portion that guides the extending-retracting portion 80 of the movable body 60 and has a tapering shape may be formed on the magazine receiving portion 26. At the time of causing the extending-retracting portion 80 to enter the inserting space 130, the extending-retracting portion 80 is guided with the guiding portion of the magazine receiving portion 26. With this configuration, even if the horizontal position of the movable body 60 is slightly misaligned in relation to the magazine receiving portion 26, it is possible to absorb this misalignment within a range of looseness (backlash) between individual members that constitute the extending-retracting portion 80, which makes it possible to insert the extending-retracting portion 80 into the inserting space 130.

Furthermore, it is also preferable that the dispensing device 100 include an open-close-door unlock mechanism for an operator to manually unlock the locked state of the open-close-door lock mechanism at the time of a power outage or the like.

Similarly, it is also preferable that the dispensing device 100 include a front-door lock mechanism used to turn the front surface wall 11 into the locked state so that the front surface wall 11 is not opened during normal time, and also include a front-door unlock mechanism used for an operator to manually unlock the locked state of the front-door lock mechanism at the time of a power outage or the like.

For example, the open-close-door unlock mechanism and the front-door unlock mechanism are configured to include a lever member used to unlock a lock, and are also configured such that a rod-shaped body such as a ballpoint pen is inserted from the front surface side of the open-close door 17 or the front surface wall 11, and the lever member swings to unlock the locked state of the open-close-door unlock mechanism or the front-door unlock mechanism. This makes it possible for an operator to manually pick up a product 50 from a magazine 30 disposed at the back of the open-close door 17 or the front surface wall 11 to sell it.

This exemplary embodiment includes the following technical ideas.
(1) A dispensing device that can dispense a product to be dispensed, including:
   a magazine that stores a plurality of products in a stacked state;
   a storage shelf that stores a plurality of the magazines;
   a conveying mechanism that conveys the magazine; and
   a dispensing mechanism that dispenses the product, in which
   the storage shelf includes:
      an installed-magazine mounting portion at which the magazine is installed and mounted; and
      a magazine supporting portion that supports a plurality of the magazines,
   the dispensing mechanism is configured to dispense the product from the magazine supported with the magazine supporting portion, and
   the conveying mechanism conveys the magazine between the installed-magazine mounting portion and the magazine supporting portion.
(2) The dispensing device according to (1), in which
   the conveying mechanism includes a movable body that holds the magazine and moves, and
   the movable body can move between a first handover position and a second handover position, the first handover position being a position where the magazine can be handed over between this movable body and the installed-magazine mounting portion, the second handover position being a position where the magazine can be handed over between the movable body and the magazine supporting portion.
(3) The dispensing device according to (2), in which
   the movable body can move vertically and horizontally in a state where the magazine is held.
(4) The dispensing device according to (3), in which
   the movable body includes:
   a movable-body main body that can move vertically and horizontally; and
   an extending-retracting portion that can extend and retract with respect to the movable-body main body and in an extending-retracting direction extending horizontally, the extending-retracting direction intersecting a direction in which the movable-body main body moves horizontally,
   the conveying mechanism causes the extending-retracting portion to relatively ascend with respect to the installed-magazine mounting portion or the magazine supporting portion in a state where the extending-retracting portion is caused to protrude from the movable-body main body, thereby holding the magazine with the extending-retracting portion, and
   the conveying mechanism moves the movable-body main body in a state where the magazine is held with the extending-retracting portion, thereby moving the magazine between the first handover position and the second handover position.
(5) The dispensing device according to (4), in which
   the magazine supporting portion includes a magazine receiving portion that supports the magazine in a state where an inserting space for the extending-retracting portion is secured below a bottom surface of the magazine.
(6) The dispensing device according to (5), in which
   the magazine supporting portion includes a pair of magazine guiding portions that are erected from the magazine receiving portion and are disposed so as to be opposed to each other, and
   in a state where the magazine is supported with the magazine receiving portion, the pair of magazine guiding portions are each brought close to or brought into contact with each of both side surfaces of the magazine.
(7) The dispensing device according to (6), in which
   an upper end portion of each of the pair of magazine guiding portions has a protruding portion that protrudes toward each other.
(8) The dispensing device according to (7), in which
   the protruding portion of each of the pair of magazine guiding portions has a central portion in the extending-retracting direction of the extending-retracting portion, the central portion more protruding toward each other as compared with both end portions of the protruding portion in the extending-retracting direction.
(9) The dispensing device according to any one of (4) to (8), in which
   the conveying mechanism conveys the magazine between the first handover position and the second handover position in a state where the extending-retracting portion is caused to be accommodated in the movable-body main body and the magazine is caused to be held at a position above the movable-body main body.
(10) The dispensing device according to (9), in which
   the movable body includes a pair of movable-body-side magazine guiding portions that are erected from the movable-body main body, the pair of movable-body-side magazine guiding portions being disposed so as to be opposed to each other, and
   in a state where the conveying mechanism causes the magazine to be held at a position above the movable-body main body, the pair of movable-body-side magazine guiding portions are each brought close to or brought into contact with each of both side surfaces of the magazine.
(11) The dispensing device according to (10), in which
   an upper end portion of each of the pair of movable-body-side magazine guiding portions has an upper-end protruding portion that protrudes toward each other.
(12) The dispensing device according to (11), in which
   the upper-end protruding portion of each of the pair of movable-body-side magazine guiding portions has a central portion in the extending-retracting direction of the extending-retracting portion, the central portion more protruding toward each other than both end portions of the upper-end protruding portion in this extending-retracting direction.
(13) The dispensing device according to any one of (10) to (12), in which
   at least one of the pair of movable-body-side magazine guiding portions includes a product detecting sensor that detects the product within the magazine supported with the magazine supporting portion.
(14) The dispensing device according to (13), in which
   the pair of movable-body-side magazine guiding portions each include the product detecting sensor.
(15) The dispensing device according to (13) or (14), including
   a quantity judging unit that judges a quantity of the product in the magazine on a basis of a detection result by the product detecting sensor.
(16) The dispensing device according to any one of (13) to (15), including
   an improper-loading judging unit that judges an improper loading of the product in the magazine on a basis of a detection result by the product detecting sensor.
(17) The dispensing device according to any one of (4) to (16), in which
   the extending-retracting portion is shared by the conveying mechanism and the dispensing mechanism, and
   the dispensing mechanism causes the extending-retracting portion to protrude from the movable-body main body to push out the product from the magazine, thereby dispensing the product.
(18) The dispensing device according to (17), in which
   the magazine includes a discharging port that allows the product to be discharged from the magazine, and
   the dispensing device includes:
   a shutter member that is provided swingably with respect to the installed-magazine mounting portion or the magazine supporting portion, the shutter member being pushed by the extending-retracting portion to tilt when the extending-retracting portion protrudes from the movable-body main body; and
   a stabilizing member, in which, when the shutter member is not being pushed by the extending-retracting portion, the stabilizing member keeps the shutter member in an erected state where at least part of the discharging port is closed.
(19) The dispensing device according to (17) or (18), including:
   a chute that is disposed below the storage shelf and guides downward the product toward a pick-up position, this product having been pushed out from the magazine; and
   a posture controlling member that is disposed at a position below and on a side toward which the product is pushed out, the position being with respect to the magazine, in which
   the posture controlling member includes a sloped surface that is sloped downward toward a direction in which the product is pushed out, and
   with this sloped surface, a posture of the product that has been pushed out from the magazine is controlled.
(20) The dispensing device according to any one of (4) to (19), in which,
   in a state where the magazine is held with the extending-retracting portion, a protrusion or hole formed on or in a bottom surface of the magazine can be fitted with a hole or protrusion formed in or on an upper surface of the extending-retracting portion.
(21) The dispensing device according to any one of (4) to (20), in which,
   in a state where the magazine is held with the extending-retracting portion, a bottom surface of the magazine and the extending-retracting portion are attached to each other with magnetic force.
(22) The dispensing device according to any one of (2) to (21), including
   a second storage shelf including the magazine supporting portion and disposed so as to be opposed to the storage shelf, in which
   the movable body can move in a movement region between the storage shelf and the second storage shelf, and
   the conveying mechanism can convey the magazine from the common installed-magazine mounting portion to the magazine supporting portion of the storage shelf and also to the magazine supporting portion of the second storage shelf.
(23) The dispensing device according to any one of (1) to (22), in which
   the magazine includes a box-shaped magazine main body having a discharging port for the product, and can store the plurality of products within the magazine main body,
   the discharging port is disposed at a position corresponding to a product at a lowermost column among the product stored within the magazine main body, and
   the dispensing mechanism dispenses the product at the lowermost column within the magazine main body through the discharging port.
(24) The dispensing device according to (23), in which
   the dispensing device includes a spacer member that is disposed within the magazine main body in accordance with a size of the product stored in the magazine main body, and fills a space between an inner wall of the magazine main body and the product.
(25) The dispensing device according to (23) or (24), in which
   the magazine includes an adjusting mechanism that allows an opening area of the discharging port to be adjusted in accordance with a size of the product stored in the magazine main body.
(26) The dispensing device according to (25), in which
   the adjusting mechanism is configured to include a sliding member provided so as to be able to slide with respect to the magazine main body.
(27) The dispensing device according to any one of (1) to (26), in which
   the storage shelf stores a plurality of the magazines in a plural-array manner in a vertical direction and a plural-array manner in a horizontal direction.
(28) The dispensing device according to any one of (1) to (27), including
   a magazine-conveying controlling unit in which, in a case where the magazine is mounted at the installed-magazine mounting portion, the magazine-conveying controlling unit performs control of conveying this magazine to an available region of the magazine supporting portion of the storage shelf using the conveying mechanism.
(29) The dispensing device according to any one of (1) to (28), including:
   a dispense-instruction acquiring unit;
   an open-close door that can switch between an opened state where the magazine can be inserted into and taken out from the installed-magazine mounting portion and a closed state where the magazine cannot be inserted into and taken out from the installed-magazine mounting portion;
   an open-close detecting portion that detects whether or not the open-close door is closed;
   an open-close-door lock mechanism that can switch between a locked state where the open-close door is kept in the closed state and a non-locked state where the open-close door can be opened and closed; and
   a dispensing controlling unit in which, if the open-close detecting portion detects that the open-close door is closed in a case where the dispense-instruction acquiring unit acquires a dispense instruction when the open-close detecting portion detects that the open-close door is opened, the dispensing controlling unit performs control of switching the open-close-door lock mechanism into the locked state, and also performs control of causing the dispensing mechanism to dispense the product from the magazine, these controls being performed in this order.
(30) The dispensing device according to any one of (1) to (29), including
   a partition wall portion that is erected between side surfaces of adjacent magazines from among the magazines disposed at the magazine supporting portion or the installed-magazine mounting portion, in which,
   in a state where the magazine is disposed at the magazine supporting portion or the installed-magazine mounting portion, a side surface of the magazine and the partition wall portion engage with each other, thereby restricting falling-over of the magazine.

The present application claims priority based on Japanese Patent Application No. 2017-191831 filed in Japan on September 29, 2017, the disclosures of which are incorporated herein by reference in their entirety.

### Explanation of Reference Characters

- 10: housing
- 11: front surface wall
- 12: top plate portion
- 13: left side wall
- 14: right side wall
- 15: back surface wall
- 16: bottom plate portion
- 17: open-close door
- 17a: installation port
- 18: pick-up opening
- 19: chute
- 20: pick-up position
- 21: storage shelf
- 22: second storage shelf
- 23: magazine supporting portion
- 24: installed-magazine mounting portion
- 25: shelf plate
- 26: magazine receiving portion
- 26a: bearing portion
- 27: magazine guiding portion
- 27a: erected wall portion
- 27b: protruding portion
- 30: magazine
- 31: box main body portion
- 31a: opening
- 32: box lid portion
- 32a: opening
- 33: discharging port
- 34: locking hole
- 35: protrusion
- 36a: upper-side fitting hole
- 36b: lower-side fitting hole
- 36c: slide hole
- 37: sliding member
- 37a: fitting pin
- 37b: slide pin
- 37c: bending portion
- 38: base portion
- 39: swing portion
- 41: first side spacer member
- 42: second side spacer member
- 43: front-side spacer member
- 44: rear-side spacer member
- 50: product
- 60: movable body
- 61: movable-body-side magazine guiding portion
- 61a: erected wall portion
- 61b: upper-end protruding portion
- 70: movable-body main body
- 71: lower portion housing
- 71a: lower-side member that constitutes a housing
- 71b: upper-side member that constitutes a housing
- 71c: fixing hook
- 72: fixing member
- 73: press member
- 73a: rack portion
- 74: guide member
- 75: rack member
- 75a: rack portion
- 76: pinion
- 77: pinion
- 80: extending-retracting portion
- 81: extending-retracting portion main body
- 811: main body member
- 811a: pinion holding boss
- 82: second extending-retracting portion main body
- 82a: rack portion
- 82b: pinion holding boss
- 83: third extending-retracting portion main body
- 83a: rack portion
- 83b: hole
- 831: downward protruding portion
- 832: magnet
- 90: movement mechanism
- 91, 92: frame
- 93: pulley
- 94: Y driving timing belt
- 95: drive transmitting shaft
- 96: supporting plate
- 97: rail
- 98: mounting plate
- 100,: 100A, 100B dispensing device
- 111: product detecting sensor
- 112: product detecting sensor
- 113: product detecting sensor
- 114: product detecting sensor
- 120: posture controlling member
- 121: curved plate-shaped portion
- 122: sloped surface
- 123: intersecting plate portion
- 124: rotating shaft portion
- 125: side plate
- 126: vertical plate-shaped portion
- 130: inserting space
- 141: first handover position
- 150: controlling unit
- 151: CPU
- 152: ROM
- 153: RAM
- 155: dispense-instruction acquiring unit
- 161: extending-retracting driving motor
- 162: X driving motor
- 163: Y driving motor
- 171: guide plate
- 171a: erected plate portion
- 171b: sloped plate portion
- 181: movement region
- 191: bar code reader
- 301: bottom plate
- 302: attachment member
- 311: partition wall portion
- 312: rib
- 313: groove portion
- 315: protrusion
- 320: shutter member
- 330: stabilizing member

## Claims

1. A dispensing device that can dispense a product to be dispensed, comprising:
a magazine that stores a plurality of products in a stacked state;
a storage shelf that stores a plurality of the magazines;
a conveying mechanism that conveys the magazine; and
a dispensing mechanism that dispenses the product, wherein
the storage shelf comprises:
an installed-magazine mounting portion at which the magazine is installed and mounted; and
a magazine supporting portion that supports a plurality of the magazines,
the dispensing mechanism is configured to dispense the product from the magazine supported with the magazine supporting portion, and
the conveying mechanism conveys the magazine between the installed-magazine mounting portion and the magazine supporting portion.

2. The dispensing device according to claim 1, wherein
the conveying mechanism includes a movable body that holds the magazine and moves, and
the movable body can move between a first handover position and a second handover position, the first handover position being a position where the magazine can be handed over between this movable body and the installed-magazine mounting portion, the second handover position being a position where the magazine can be handed over between the movable body and the magazine supporting portion.

3. The dispensing device according to claim 2, wherein
the movable body can move vertically and horizontally in a state where the magazine is held.

4. The dispensing device according to claim 3, wherein the movable body includes:
a movable-body main body that can move vertically and horizontally; and
an extending-retracting portion that can extend and retract with respect to the movable-body main body and in an extending-retracting direction extending horizontally, the extending-retracting direction intersecting a direction in which the movable-body main body moves horizontally,
the conveying mechanism causes the extending-retracting portion to relatively ascend with respect to the installed-magazine mounting portion or the magazine supporting portion in a state where the extending-retracting portion is caused to protrude from the movable-body main body, thereby holding the magazine with the extending-retracting portion, and
the conveying mechanism moves the movable-body main body in a state where the magazine is held with the extending-retracting portion, thereby moving the magazine between the first handover position and the second handover position.

5. The dispensing device according to claim 4, wherein
the magazine supporting portion includes a magazine receiving portion that supports the magazine in a state where an inserting space for the extending-retracting portion is secured below a bottom surface of the magazine.

6. The dispensing device according to claim 5, wherein
the magazine supporting portion includes a pair of magazine guiding portions that are erected from the magazine receiving portion and are disposed so as to be opposed to each other, and
in a state where the magazine is supported with the magazine receiving portion, the pair of magazine guiding portions are each brought close to or brought into contact with each of both side surfaces of the magazine.

7. The dispensing device according to claim 6, wherein
an upper end portion of each of the pair of magazine guiding portions has a protruding portion that protrudes toward each other.

8. The dispensing device according to claim 7, wherein
the protruding portion of each of the pair of magazine guiding portions has a central portion in the extending-retracting direction of the extending-retracting portion, the central portion more protruding toward each other as compared with both end portions of the protruding portion in the extending-retracting direction.

9. The dispensing device according to any one of claims 4 to 8, wherein
the conveying mechanism conveys the magazine between the first handover position and the second handover position in a state where the extending-retracting portion is caused to be accommodated in the movable-body main body and the magazine is caused to be held at a position above the movable-body main body.

10. The dispensing device according to claim 9, wherein
the movable body includes a pair of movable-body-side magazine guiding portions that are erected from the movable-body main body, the pair of movable-body-side magazine guiding portions being disposed so as to be opposed to each other, and
in a state where the conveying mechanism causes the magazine to be held at a position above the movable-body main body, the pair of movable-body-side magazine guiding portions are each brought close to or brought into contact with each of both side surfaces of the magazine.

11. The dispensing device according to claim 10, wherein
an upper end portion of each of the pair of movable-body-side magazine guiding portions has an upper-end protruding portion that protrudes toward each other.

12. The dispensing device according to claim 11, wherein
the upper-end protruding portion of each of the pair of movable-body-side magazine guiding portions has a central portion in the extending-retracting direction of the extending-retracting portion, the central portion more protruding toward each other than both end portions of the upper-end protruding portion in this extending-retracting direction.

13. The dispensing device according to any one of claims 10 to 12, wherein
at least one of the pair of movable-body-side magazine guiding portions includes a product detecting sensor that detects the product within the magazine supported with the magazine supporting portion.

14. The dispensing device according to claim 13, wherein
the pair of movable-body-side magazine guiding portions each include the product detecting sensor.

15. The dispensing device according to claim 13 or 14, comprising
a quantity judging unit that judges a quantity of the product in the magazine on a basis of a detection result by the product detecting sensor.

16. The dispensing device according to any one of claims 13 to 15, comprising
an improper-loading judging unit that judges an improper loading of the product in the magazine on a basis of a detection result by the product detecting sensor.

17. The dispensing device according to any one of claims 4 to 16, wherein
the extending-retracting portion is shared by the conveying mechanism and the dispensing mechanism, and
the dispensing mechanism causes the extending-retracting portion to protrude from the movable-body main body to push out the product from the magazine, thereby dispensing the product.

18. The dispensing device according to claim 17, wherein
the magazine includes a discharging portion that allows the product to be discharged from the magazine, and
the dispensing device includes:
a shutter member that is provided swingably with respect to the installed-magazine mounting portion or the magazine supporting portion, the shutter member being pushed by the extending-retracting portion to tilt when the extending-retracting portion protrudes from the movable-body main body; and
a stabilizing member, in which, when the shutter member is not being pushed by the extending-retracting portion, the stabilizing member keeps the shutter member in an erected state where at least part of the discharging port is closed.

19. The dispensing device according to claim 17 or 18, including:
a chute that is disposed below the storage shelf and guides downward the product toward a pick-up position, this product having been pushed out from the magazine; and
a posture controlling member that is disposed at a position below and on a side toward which the product is pushed out, the position being with respect to the magazine, wherein
the posture controlling member includes a sloped surface that is sloped downward toward a direction in which the product is pushed out, and
with this sloped surface, a posture of the product that has been pushed out from the magazine is controlled.

20. The dispensing device according to any one of claims 4 to 19, wherein,
in a state where the magazine is held with the extending-retracting portion, a protrusion or hole formed on or in a bottom surface of the magazine can be fitted with a hole or protrusion formed in or on an upper surface of the extending-retracting portion.

21. The dispensing device according to any one of claims 4 to 20, wherein,
in a state where the magazine is held with the extending-retracting portion, a bottom surface of the magazine and the extending-retracting portion are attached to each other with magnetic force.

22. The dispensing device according to any one of claims 2 to 21, comprising
a second storage shelf including the magazine supporting portion and disposed so as to be opposed to the storage shelf, wherein
the movable body can move in a movement region between the storage shelf and the second storage shelf, and
the conveying mechanism can convey the magazine from the common installed-magazine mounting portion to the magazine supporting portion of the storage shelf and also to the magazine supporting portion of the second storage shelf.

23. The dispensing device according to any one of claims 1 to 22, wherein
the magazine includes a box-shaped magazine main body having a discharging port for the product, and can store the plurality of products within the magazine main body,
the discharging port is disposed at a position corresponding to a product at a lowermost column among the product stored within the magazine main body, and
the dispensing mechanism dispenses the product at the lowermost column within the magazine main body through the discharging port.

24. The dispensing device according to claim 23, wherein
the dispensing device includes a spacer member that is disposed within the magazine main body in accordance with a size of the product stored in the magazine main body, and fills a space between an inner wall of the magazine main body and the product.

25. The dispensing device according to claim 23 or 24, wherein
the magazine includes an adjusting mechanism that allows an opening area of the discharging port to be adjusted in accordance with a size of the product stored in the magazine main body.

26. The dispensing device according to claim 25, wherein
the adjusting mechanism is configured to include a sliding member provided so as to be able to slide with respect to the magazine main body.

27. The dispensing device according to any one of claims 1 to 26, wherein
the storage shelf stores a plurality of the magazines in a plural-array manner in a vertical direction and a plural-array manner in a horizontal direction.

28. The dispensing device according to any one of claims 1 to 27, comprising
a magazine-conveying controlling unit in which, in a case where the magazine is mounted at the installed-magazine mounting portion, the magazine-conveying controlling unit performs control of conveying this magazine to an available region of the magazine supporting portion of the storage shelf using the conveying mechanism.

29. The dispensing device according to any one of claims 1 to 28, comprising:
a dispense-instruction acquiring unit;
an open-close door that can switch between an opened state where the magazine can be inserted into and taken out from the installed-magazine mounting portion and a closed state where the magazine cannot be inserted into and taken out from the installed-magazine mounting portion;
an open-close detecting portion that detects whether or not the open-close door is closed;
an open-close-door lock mechanism that can switch between a locked state where the open-close door is kept in the closed state and a non-locked state where the open-close door can be opened and closed; and
a dispensing controlling unit in which, if the open-close detecting portion detects that the open-close door is closed in a case where the dispense-instruction acquiring unit acquires a dispense instruction when the open-close detecting portion detects that the open-close door is opened, the dispensing controlling unit performs control of switching the open-close-door lock mechanism into the locked state, and also performs control of causing the dispensing mechanism to dispense the product from the magazine, these controls being performed in this order.

30. The dispensing device according to any one of claims 1 to 29, comprising
a partition wall portion that is erected between side surfaces of adjacent magazines from among the magazine disposed at the magazine supporting portion or the installed-magazine mounting portion, wherein,
in a state where the magazine is disposed at the magazine supporting portion or the installed-magazine mounting portion, a side surface of the magazine and the partition wall portion engage with each other, thereby restricting falling-over of the magazine.
